# EUROPÄISCHE PATENTSCHRIFT

(11) **EP 4 115 267 B1**
(45) Veröffentlichungstag und Bekanntmachung des Hinweises auf die Patenterteilung: **29.10.2025**
(21) Anmeldenummer: 21710395.1
(22) Anmeldetag: 02.03.2021
(51) Int. Cl.: G06F 3/01, G06T 11/60, G06T 19/00, G09B 9/05, G09B 9/30, B60K 35/10, B60K 35/21, B60K 35/22, B60K 35/23, H04N 13/156, H04N 13/161, G02B 27/01

(54) **VERFAHREN ZUR DARSTELLUNG EINER UMGEBUNG MITTELS EINER AN EINER PERSON ANGEORDNETEN UND FÜR DIE PERSON SICHTBAREN ANZEIGEEINHEIT**
METHOD FOR REPRESENTING AN ENVIRONMENT BY MEANS OF A DISPLAY UNIT ARRANGED ON A PERSON AND VISIBLE FOR THE PERSON
PROCÉDÉ DE REPRÉSENTATION D'UN ENVIRONNEMENT AU MOYEN D'UNE UNITÉ D'AFFICHAGE DISPOSÉE SUR UNE PERSONNE ET VISIBLE POUR LA PERSONNE

(30) Priorität: 05.03.2020 AT 501702020
(43) Veröffentlichungstag der Anmeldung: 11.01.2023
(73) Patentinhaber: NEKONATA XR TECHNOLOGIES GMBH, 2340 Mödling (AT)
(72) Erfinder: WAGNER, Martin, 2340 Mödling (AT)
(74) Vertreter: Wildhack & Jellinek Patentanwälte GmbH
(86) Internationale Anmeldenummer: PCT/AT2021/060068
(87) Internationale Veröffentlichungsnummer: WO 2021/174273

(56) Entgegenhaltungen:
- US-A1- 2010 245 387
- US-A1- 2016 148 429
- US-A1- 2019 019 430
- US-B1- 9 995 936

## Beschreibung

Die Erfindung betrifft ein Verfahren zur Darstellung einer Umgebung mittels einer an einer Person angeordneten und für die Person sichtbaren Anzeigeeinheit als Anzeigebild im Rahmen einer Simulation gemäß Patentanspruch 1 sowie eine Simulationsanordnung gemäß Patentanspruch 13.

Aus dem Stand der Technik sind verschiedene Verfahren und Vorrichtungen zur Darstellung einer Umgebung als Anzeigebild für eine Person im Rahmen einer Simulation bekannt. Dabei werden beispielsweise tragbare Darstellungsvorrichtungen mit Bildschirmen, wie beispielsweise Head-Mounted Displays zum Einsatz, die entweder teilweise transparent sind, sodass die Umgebung teilweise durch das Display wahrgenommen oder eingeblendet werden kann, während andere Bereiche mit virtuellen Bildern überblendet werden. Derartige Vorrichtungen sind beispielsweise aus der US 2018204478 A1, der WO 2012039877 A1 und der US 2012206452 A1 bekannt. Derartige Darstellungsvorrichtungen können mit Eingabegeräten wie Handschuhen mit integrierten Sensoren oder in der Hand gehaltenen Eingabevorrichtungen kombiniert werden, um dem Benutzer die Möglichkeit zu geben, auf die Simulation Einfluss zu nehmen. In der WO 2016079476 A1 ist beispielsweise gezeigt, dass virtuelle Steuerungselemente für den Benutzer eingeblendet werden, die dieser virtuell bedienen kann.

Bei den aus dem Stand der Technik bekannten Verfahren und Vorrichtungen sind jedoch die Interaktionsmöglichkeiten für den Benutzer mit der Simulation eingeschränkt. Weiters können beispielsweise bei teilweise durchsichtigen Darstellungsmedien sichtbare Artefakte in der Simulation im Blickfeld des Benutzers auftreten, da das Abbild der Umgebung mit einer virtuellen Darstellung nur überlappt wird und das Sichtfeld des Benutzers wird dadurch eingeschränkt. Weiters können bei den aus dem Stand der Technik bekannten Verfahren virtuelle Objekte nur an vorgegebenen Positionen im realen Raum bzw. Bild eingeblendet werden.

Aufgabe der Erfindung ist es daher, diesbezüglich Abhilfe zu schaffen und ein Verfahren und eine Vorrichtung zur Darstellung einer Umgebung mittels einer an einer Person angeordneten und für die Person sichtbaren Anzeigeeinheit als Anzeigebild im Rahmen einer Simulation bereitzustellen, die ein möglichst uneingeschränktes Sichtfeld für den Benutzer ohne z.B. aus einer Überblendung resultierende Artefakte, die bei transparenten Anzeigeeinheiten auftreten, gewährleisten und es einem Benutzer ermöglichen, auf besonders realitätsnahe Weise mit der Simulation zu interagieren bzw. die Simulation zu beeinflussen.

Die Erfindung löst diese Aufgabe mit einem Verfahren gemäß Patentanspruch 1.

Des Weiteren, ist in einem Ausführungsbeispiel vorgesehen, dass zur Darstellung einer Umgebung mittels einer an einer Person angeordneten und für die Person sichtbaren Anzeigeeinheit, insbesondere mittels einer 3D-Brille, als Anzeigebild im Rahmen einer Simulation,
- die Simulation in einer Interaktionsumgebung, insbesondere einem Cockpit, durchgeführt wird, wobei in der Interaktionsumgebung eine Anzahl von betätigbaren Interaktionselementen angeordnet sind und wobei die Simulation mittels der Interaktionselemente beeinflussbar ist,
- zumindest eine, zumindest Teile der Interaktionsumgebung abbildende, Interaktionsumgebungs-Aufnahme, insbesondere zwei Interaktionsumgebungs-Aufnahmen, mittels zumindest einer ersten, auf der Person oder relativ zur Person angeordneten, Bildaufnahmeeinheit erstellt wird,
- die Position der Person in der Interaktionsumgebung ermittelt wird und abhängig von der Position der Person ein Umgebungsbild aus einer virtuellen und/oder realen Umgebung bereitgestellt wird,
- wbei eine Bildmaske bereitgestellt wird,
   - wobei einzelne Positionen auf der zumindest einen Interaktionsumgebungs-Aufnahme, dem Umgebungsbild, der Bildmaske und dem Anzeigebild einander zugeordnet sind,
   - wobei eine Interaktionsumgebungs-Abstandsinformation zwischen der Person und der Interaktionsumgebung ermittelt wird und positionsweise, insbesondere pixelweise, die Interaktionsumgebungs-Abstandsinformation den einzelnen Bildbereichen der zumindest einen Interaktionsumgebungs-Aufnahme zugeordnet wird, und/oder
   positionsweise, insbesondere pixelweise, zumindest ein Bildparameterwert, insbesondere ein Bildparameterwert ausgewählt aus Bildschärfewert, Helligkeitswert, Kontrastwert, Farbwert, der einzelnen Bildbereiche der zumindest einen Interaktionsumgebungs-Aufnahme ermittelt wird und
- die Bildmaske durch Prüfung,
   - ob der im jeweiligen Bildbereich der zumindest einen InteraktionsumgebungsAufnahme abgebildete Gegenstandsbereich der Interaktionsumgebung einen vorgegebenen Interaktionsumgebungs-Abstandsschwellenwert überschreitet, und/oder
   - ob der jeweilige Bildbereich der zumindest einen Interaktionsumgebungs-Aufnahme zumindest einen für die Interaktionsumgebung vorgegebenen Bildparameter-Schwellenwert, insbesondere zumindest einen Bildparameter-Schwellenwert ausgewählt aus Bildschärfeschwellenwert, Helligkeitsschwellenwert, Kontrastschwellenwert, Farbschwellenwert, überschreitet,
   derart erstellt wird, dass das in der zumindest einen Interaktionsumgebungs-Aufnahme enthaltene Abbild der einzelnen Interaktionselemente im Anzeigebild dargestellt wird,
- die zumindest eine Interaktionsumgebungs-Aufnahme und das bereitgestellte Umgebungsbild unter Verwendung der Bildmaske pixelweise überlagert werden, und
- das derart überlagerte Bild als Anzeigebild auf der Anzeigeeinheit angezeigt wird.

Durch diese Merkmale ist es vorteilhafterweise möglich, das Abbild von Teilen der Interaktionsumgebung z.B. innerhalb eines vorgegebenen Abstands um beispielsweise die Person, an der die erste Bildaufnahmeeinheit angeordnet ist, oder z.B. aufgrund deren Oberflächenbeschaffenheit, auszuwählen und mit einem bereitgestellten Umgebungsbild, beispielsweise einem bereitgestellten Abbild einer virtuellen Umgebung, zu einem einzigen Anzeigebild für den Benutzer zusammenzuführen. Dies bedeutet, dass beispielsweise die Hände eines Nutzers und die Interaktionselemente, wie ein Lenkrad oder ein Schalthebel, die in Reichweite der Hände sind, im Anzeigebild dargestellt werden können, sodass die Realitätsnähe der Simulation verbessert wird und der Benutzer ein möglichst wirklichkeitsnahes Raumempfinden in der Simulation erhält. Auf diese Weise kann auch vermieden werden, dass der Nutzer sich während der Simulation unwohl fühlt, was auftreten kann, wenn das räumliche Empfinden der Person während der Simulation gestört ist.

Weiters werden z.B. die Hände des Benutzers oder die Interaktionselemente nicht an vorgegebenen Position im Raum eingeblendet, sondern abhängig von der Position der Person in der Interaktionsumgebung unter Verwendung der Bildmaske mit dem Umgebungsbild zu einem einzigen Anzeigebild zusammengeführt und sind an beliebigen Position im Anzeigebild sichtbar, die sich aus der Position der Person ergeben. Diese Position im Anzeigebild kann sich daher vorteilhafterweise verändern, wenn die Person sich beispielsweise in der Interaktionsumgebung bewegt, z.B. den Kopf dreht und den Oberkörper neigt.

Besonders vorteilhaft ist ein Verfahren, um Personen z.B. im Umgang mit verschiedensten Geräten zu schulen oder das richtige Verhalten in z.B. verschiedensten Verkehrssituation zu trainieren.

Als Interaktionsumgebung wird im Folgenden eine reale Umgebung bezeichnet, in der die Simulation durchgeführt wird, beispielsweise ein Cockpit eines Autos oder ein Schreibtisch mit einer Sitzgelegenheit. Als Interaktionselemente werden Objekte bezeichnet, mittels denen der Benutzer die Simulation beeinflussen kann, beispielsweise ein Lenkrad, Schalthebel, Schaltknöpfe, Kippschalter, ein Controller etc. Derartige Interaktionselemente sind in der Interaktionsumgebung angeordnet, z.B. fix integriert sind. Als Anzeigebild wird das Bild bezeichnet, das von der Anzeigeeinheit, z.B. einer 3D-Brille, für den Benutzer angezeigt wird. Unter einer Simulationsumgebung wird im Folgenden eine reale oder virtuelle Umgebung verstanden, die für den Benutzer simuliert werden soll, beispielsweise ein realer oder virtueller Straßenzug, wenn für den Benutzer das Steuern z.B. eines Autos simuliert werden soll.

Unter einer Bildmaske werden im Folgenden ein 2D-Bild, ein 3D-Modell oder zusammenhängende Bild- oder Raumpositionen verstanden, die eine Form, Fläche oder Linien bzw. Strahlen, oder Kombinationen davon, definieren, die dazu genutzt werden können, aus unterschiedlichen Quellen stammende, virtuelle oder reale Bildaufnahmen wie die Interaktionsumgebungs-Aufnahme und das Umgebungsbild zu einem einzigen Anzeigebild zusammenzuführen.

Unter Bildparameterwerten werden im Folgenden alphanumerische Variablen verstanden, die bestimmte Bildeigenschaften oder Eigenschaften von einzelnen Bildpunkten oder Bildbereichen einer Bildaufnahme definieren. Das betrifft statische (a posteriori) Eigenschaften, die ein vorhandenes Bild definieren (bspw. Helligkeitswert) wie auch a priori Eigenschaften, die durch die Bildaufnahmeeinheit definiert werden und die Bildaufnahme beeinflussen (bspw. Blendenzahl einer Kamera). Bei Bildparameterwerten kann es sich beispielsweise um einen Bildschärfewert, Helligkeitswert, Kontrastwert oder Farbwert handeln.

Unter einem Bildschärfewert wird im Folgenden ein Wert verstanden, der die Detailerkennung von Bildinhalten beschreibt. Dies inkludiert sowohl physikalische Schärfe, also die Kantenschärfe einzelner Bildabschnitte, die eine Aussage über den punktuellen Übergang von Hell zu Dunkel liefert, als auch der subjektive Schärfeeindruck, abhängig von Bildoptimierung, Auflösung, Artefakten und anderen Faktoren.

Unter Helligkeitswert wird im Folgenden der Weiß-Anteil eines Bildbereichs bzw. der gemessene Wert der Beleuchtung oder Luminanz, welche durch Umgebungslicht entsteht, verstanden.

Unter Kontrastwert wird im Folgenden ein Verhältnis zwischen den hellsten und dunkelsten Bildbereichen einer Aufnahme bzw. ein Verhältnis der verschiedenen Helligkeiten von benachbarten Bildbereichen einer Aufnahme zueinander verstanden.

Unter Farbwert wird im Folgenden die Menge an Rot-, Grün, und Blauanteilen eines bestimmten Pixels bzw. Bildbereichs einer Aufnahme verstanden.

Um in verschiedensten Simulationsanwendungen auf besonders einfache Weise verschiedenste Simulationsumgebungen für einen Benutzer in einem Anzeigebild darstellen zu können und es derart zu ermöglichen, für die jeweilige Simulationsumgebung eine besonders wirklichkeitsnahe Simulation bereitzustellen, kann vorgesehen sein, dass
- für die Bereitstellung des Umgebungsbilds
   - zumindest eine, zumindest Teile einer Simulationsumgebung, abbildende, Simulationsumgebungs-Aufnahme, insbesondere zwei Simulationsumgebungs-Aufnahmen, mittels zumindest einer zweiten, in der Simulationsumgebung angeordneten Bildaufnahmeeinheit, erstellt wird,
      wobei die Position der zweiten Bildaufnahmeeinheit in der Simulationsumgebung ermittelt wird und
      wobei das Umgebungsbild aus der Simulationsumgebung abhängig von der Position der Person und der Position der zweiten Bildaufnahmeeinheit derart bereitgestellt wird, dass die Aufnahmebereiche der ersten Bildaufnahmeeinheit und der zweiten Bildaufnahmeeinheit miteinander gekoppelt sind,
- wobei die Bildmaske derart bereitgestellt wird, dass einzelne Positionen auf der zumindest einen Interaktionsumgebungs-Aufnahme, der zumindest einen Simulationsumgebungs-Aufnahme, der Bildmaske und dem Anzeigebild einander zugeordnet sind, wobei
   - eine Simulationsumgebungs-Abstandsinformation zwischen der zumindest einen zweiten Bildaufnahmeeinheit und der Simulationsumgebung ermittelt wird und positionsweise, insbesondere pixelweise, die Simulationsumgebungs-Abstandsinformation den einzelnen Bildbereichen der zumindest einen Simulationsumgebungs-Aufnahme zugeordnet wird,
   und/oder
   positionsweise, insbesondere pixelweise, zumindest ein Bildparameterwert, insbesondere ein Bildparameterwert ausgewählt aus Bildschärfewert, Helligkeitswert, Kontrastwert, Farbwert, der einzelnen Bildbereiche der zumindest einen Simulationsumgebungs-Aufnahme ermittelt wird und
- wobei die Bildmaske durch zusätzliche Prüfung,
   - ob der im jeweiligen Bildbereich der zumindest einen Simulationsumgebungs-Aufnahme abgebildete Gegenstandsbereich der Simulationsumgebung einen vorgegebenen Simulationsumgebungs-Abstandsschwellenwert überschreitet und/oder
   - ob der jeweilige Bildbereich der zumindest einen Simulationsumgebungs-Aufnahme zumindest einen für die Simulationsumgebung vorgegebenen Bildparameter-Schwellenwert, insbesondere zumindest einen Bildparameter-Schwellenwert ausgewählt aus Bildschärfeschwellenwert, Helligkeitsschwellenwert, Kontrastschwellenwert, Farbschwellenwert, überschreitet,
   erstellt wird und
- wobei für die Erstellung des Anzeigebilds die zumindest eine Interaktionsumgebungs-Aufnahme und das bereitgestellte Umgebungsbild aus der Simulationsumgebung unter Verwendung der Bildmaske pixelweise überlagert werden.

Auf diese Weise kann ein Umgebungsbild aus einer realen Umgebung, d.h. der Simulationsumgebung, bereitgestellt werden, wobei der Aufnahmebereich der ersten und der zweiten Bildaufnahmeeinheit derart miteinander gekoppelt sind, dass die Blickrichtung des Nutzers in der Interaktionsumgebung der Blickrichtung der Bildaufnahmeeinheit in der Simulationsumgebung entspricht. So kann vorteilhafter Weise erzielt werden, dass ein Nutzer der Simulation den Eindruck hat, als ob er sich tatsächlich in der Simulationsumgebung befindet und mittels der Interaktionselemente in der Interaktionsumgebung mit der Simulationsumgebung interagieren kann.

Als Simulationsumgebung wird im Folgenden eine reale Umgebung bezeichnet, die für den Benutzer simuliert werden soll.

Unter "gekoppelten" Aufnahmebereichen ist in diesem Zusammenhang zu verstehen, dass der Aufnahmebereich der ersten Bildaufnahmeeinheit und der Aufnahmebereich der zweite Bildaufnahmeeinheit derart zueinander in Beziehung stehen, dass die Bewegung oder Translation und Rotation der jeweils einen Bildaufnahmeeinheit zu einer Translation und Rotation der jeweils anderen Bildaufnahmeeinheit führt.

Eine besonders exakte Überblendung der Interaktionsumgebungs-Aufnahme mit dem bereitgestellten Umgebungsbild kann erzielt werden, wenn die Bildmaske erstellt wird, indem die positionsweise, insbesondere pixelweise, erstellte Abstandsinformation und/oder der positionsweise, insbesondere pixelweise, ermittelte Bildparameterwert, insbesondere der Schärfewert und/oder Helligkeits- und/oder Kontrastwert und/oder Farbwert, herangezogen wird, um, insbesondere durch Schwellenwertvergleich, zu ermitteln, ob und/oder in welchem Ausmaß die zumindest eine Interaktionsumgebungs-Aufnahme und/oder das bereitgestellte Umgebungsbild für die Erstellung des Anzeigebilds herangezogen werden.

So können vorteilhafter Weise harte Übergänge und Kanten im Anzeigebild sowie Kameraartefakte und Artefakte, die auf variierende Belichtung zurückzuführen sind, vermieden werden, sowie Gegenstände in der Interaktionsumgebung, die nicht im Anzeigebild erscheinen sollen, besonders zuverlässig entfernt werden.

Eine besonders exakte Abstandsinformation für die Erstellung der Bildmaske kann erhalten werden, wenn die Abstandsinformation auf Grundlage der Interaktionsumgebungs-Aufnahme, und/oder gegebenenfalls auf Grundlage der Simulationsumgebungs-Aufnahme ermittelt wird, und/oder
wenn die Abstandsinformation mittels eines auf der Person, insbesondere der Anzeigeeinheit, und/oder gegebenenfalls auf zweiten Bildaufnahmeeinheit, angeordneten Abstandssensors ermittelt wird,
wobei insbesondere vorgesehen ist, dass mittels des Abstandssensors ein Abstandsbild der Interaktionsumgebung, und/oder gegebenenfalls der Simulationsumgebung, erstellt wird.

Eine weitere Verbesserung der Bildmaske kann erzielt werden, wenn, im Fall, dass mehrere verschiedenartige, insbesondere auf unterschiedlichen physikalischen Messprinzipien beruhende, Abstandssensoren vorgesehen sind,
nach vorgegebenen Kriterien, insbesondere in Abhängigkeit von der Tageszeit, der Sonneneinstrahlung, der Umgebungsbeleuchtung, Oberflächeneigenschaften von Objekten in der Interaktionsumgebung und/oder der Simulationsumgebung, ein Wechsel des Abstandssensors, dessen Abstandsinformation für die Erstellung der Bildmaske herangezogen wird, vorgenommen wird.

Ein besonders exakter Abstandswert, der ohne die Verwendung von zusätzlichen Abstandssensoren gewonnen werden kann, kann bereitgestellt werden, wenn die von mehreren Abstandssensoren bereitgestellten Abstandsinformationen als Grundlage für die Erstellung einer Gesamtbildmaske herangezogen werden. Auf diese Weise ist es möglich, direkt anhand des Abbilds der Interaktionsumgebung, d.h. der Interaktionsumgebungs-Aufnahme, Abstandsinformationen zu ermitteln.

Eine weitere Verbesserung der Bildmaske bzw. eine zuverlässigere Entfernung von Objekten, die nicht im Anzeigebild sichtbar sein sollen, kann erzielt werden, wenn die Abstandsinformation anhand der zumindest einen Interaktionsumgebungs-Aufnahme, und gegebenenfalls der Simulationsumgebungs-Aufnahme, durch einen Algorithmus bereitgestellt wird, der auf Techniken des Maschinellen Lernens, insbesondere künstlichen neuronalen Netzwerken und/oder Support Vector Machines, basiert,
wobei insbesondere vorgesehen ist, dass ein neuronales Netzwerk anhand von Trainingsdaten trainiert wird, wobei die Trainingsdaten Aufnahmen umfassen, deren Bildpixel mit Abstandsinformationen verknüpft sind.

Eine derartige Ausgestaltung eines Verfahrens ermöglicht es vorteilhafterweise, Abstandsinformationen in der Interaktionsumgebung bzw. der Simulationsumgebung durch einen Algorithmus bereitzustellen, der auf Techniken des maschinellen Lernens, beispielsweise künstlichen neuronalen Netzwerken und/oder Support Vector Machines, beruht. Wird beispielsweise ein neuronales Netzwerk für die Bereitstellung der Abstandsinformationen benutzt, kann dieses neuronale Netzwerk anhand von Trainingsdaten trainiert werden, wobei diese Trainingsdaten Aufnahmen beispielsweise aus Interaktionsumgebungen oder Simulationsumgebungen S umfassen, deren Bildpixel mit Abstandsinformationen verknüpft sind. Wird dem neuronalen Netzwerk anschließend eine Interaktionsumgebungs-Aufnahme oder eine Simulationsumgebungs-Aufnahme zugeführt, so kann das neuronale Netzwerk den einzelnen Bildbereichen Abstandsinformationen zuordnen.

Eine besonders zeit- und rechenleistungssparende Erstellung eines Anzeigebilds kann erzielt werden, wenn für die Überprüfung, ob ein in einem Bildbereich der zumindest einen Interaktionsumgebungs-Aufnahme abgebildeter Gegenstandsbereich der Interaktionsumgebung, und gegebenenfalls ein in einem Bildbereich der zumindest einen Simulationsumgebungs-Aufnahme abgebildeter Gegenstandsbereich der Simulationsumgebung, einen vorgegebenen Abstandsschwellenwert überschreitet, ein Hüllobjekt in Bezug auf die Interaktionsumgebung, und/oder gegebenenfalls die Simulationsumgebung, festgelegt wird.

Eine weitere Verbesserung des Ausschließens von Objekten, die nicht im Anzeigebild angezeigt werden sollen, kann erzielt werden, wenn in der zumindest einen Interaktionsumgebungs-Aufnahme, und/oder gegebenenfalls der zumindest einen Simulationsumgebungs-Aufnahme als Umgebungsbild aus der Simulationsumgebung, Abbilder von Objekten ermittelt werden, deren Oberfläche eine vorgegebene oberflächlich erkennbare Eigenschaft, insbesondere eine vorgegebene Helligkeit oder Farbe oder ein vorgegebenes Muster, aufweist und
wenn die Abbilder der derart ermittelten Objekte nicht für die Überlagerung der zumindest einen Interaktionsumgebungs-Aufnahme und des Umgebungsbilds herangezogen werden.

Ein besonders realistisches Anzeigebild kann erhalten werden, wenn eine Überblendungszone in einem vorgegebenen Abstandsbereich um den vorgegebenen Abstandsschwellenwert, insbesondere um das Hüllobjekt, vorgegeben wird und wenn bei der Überlagerung der zumindest einen Interaktionsumgebungs-Aufnahme und des bereitgestellten Umgebungsbilds, insbesondere des Umgebungsbilds der Simulationsumgebung, jeweils die Transparenz derjenigen Bildpunkte der zumindest einen Interaktionsumgebungs-Aufnahme und des Umgebungsbilds, insbesondere nach einer vorgegebenen Funktion, vorgegeben wird, die Gegenstandsbereiche innerhalb dieser Überblendungszone abbilden,
wobei insbesondere vorgesehen sein kann, dass diejenigen Bildpunkte der zumindest einen Interaktionsumgebungs-Aufnahme und des bereitgestellten Umgebungsbilds, die Gegenstandsbereiche abbilden, deren Entfernung dem Abstandsschwellenwert entspricht, bei der Überlagerung gleich transparent vorgegeben werden.

Durch eine derartige Wahl der Transparenz der Interaktionsumgebungs-Aufnahme und des Umgebungsbilds kann ein besonders wirklichkeitsnahes Anzeigebild erzielt werden, bei dem keine unerwünschten Nahtstellen bzw. Kanten im Überlagerungsbereich sichtbar sind.

Eine weitere Verbesserung des Anzeigebilds kann erzielt werden, wenn die Bildmaske im Überlagerungsbereich der zumindest einen Interaktionsumgebungs-Aufnahme und des bereitgestellten Umgebungsbilds geglättet wird, sodass die einzelnen Pixelwerte der Bildmaske ein Verhältnis definieren, in dem die betreffenden Pixelwerte der zumindest einen Interaktionsumgebungs-Aufnahme und des bereitgestellten Umgebungsbilds einander überlagern.

Ein besonders wirklichkeitsnahes Anzeigebild kann erzielt werden, wenn die Belichtung und/oder Blendenzahl der ersten Bildaufnahmeeinheit und/oder der zweiten Bildaufnahmeeinheit an Objekte, deren Abstand den vorgegebenen Abstandsschwellenwert überschreitet, angepasst wird.

Aufgabe der Erfindung ist es weiters, eine Simulationsanordnung zur Darstellung einer Umgebung als Anzeigebild im Rahmen einer Simulation bereitzustellen, mit der das erfindungsgemäße Verfahren durchgeführt werden kann, und die einem Nutzer eine besonders wirklichkeitsnahe Interaktion im Rahmen der Simulation ermöglicht.

Diese Aufgabe wird durch die Merkmale des Anspruchs 12 gelöst.

Des Weiteren ist vorgesehen, dass in einem Ausführungsbeispiel die Simulationsanordnung folgende Komponenten umfasst:
- eine an einer Person anordenbare Anzeigeeinheit, insbesondere eine 3D-Brille, die dazu ausgebildet ist, empfange Anzeigebilder für eine Person anzuzeigen,
- eine Interaktionsumgebung, insbesondere ein Cockpit, wobei in der Interaktionsumgebung eine Anzahl von betätigbaren Interaktionselementen angeordnet sind, wobei die Simulation mittels der Interaktionselemente beeinflussbar ist,
- zumindest eine erste, an einer oder relativ zu einer Person anordenbare, Bildaufnahmeeinheit, die dazu ausgebildet ist, zu einem jeweiligen Aufnahmezeitpunkt zumindest eine Interaktionsumgebungs-Aufnahme, insbesondere zwei Interaktionsumgebungs-Aufnahmen, zumindest von Teilen der Interaktionsumgebung zu erstellen, und
- eine mit der Anzeigeeinheit und der ersten Bildaufnahmeeinheit in Datenkommunikation stehende Steuer- und Verarbeitungseinheit, wobei die Steuer- und Verarbeitungseinheit dazu ausgebildet ist,
   - die Position einer Person in der Interaktionsumgebung zu ermitteln und abhängig von dieser Position ein Umgebungsbild aus einer virtuellen und/oder realen Umgebung bereitzustellen,
   - die zumindest erste Bildaufnahmeeinheit zur Erstellung von Interaktionsumgebungs-Aufnahmen anzusteuern,
   - eine Abstandsinformation zwischen der Person und der Interaktionsumgebung zu ermitteln oder zu verarbeiten und positionsweise, insbesondere pixelweise, die Abstandsinformation den einzelnen Bildbereichen der zumindest einen Interaktionsumgebungs-Aufnahme zuzuordnen und/oder positionsweise, insbesondere pixelweise, zumindest einen Bildparameterwert, insbesondere einen Bildparameterwert ausgewählt aus Bildschärfewert, Helligkeitswert, Kontrastwert, Farbwert, der einzelnen Bildbereiche der zumindest einen Interaktionsumgebungs-Aufnahme zu ermitteln, und
   - eine Bildmaske durch Prüfung,
      - ob der im jeweiligen Bildbereich der zumindest einen Interaktionsumgebungs-Aufnahme abgebildete Gegenstandsbereich der Interaktionsumgebung einen vorgegebenen Interaktionsumgebungs-Abstandsschwellenwert überschreitet,
         und/oder
      - ob der jeweilige Bildbereich der zumindest einen Interaktionsumgebungs-Aufnahme zumindest einen für die Interaktionsumgebung vorgegebenen Bildparameter-Schwellenwert, insbesondere zumindest einen Bildparameter-Schwellenwert ausgewählt aus Bildschärfeschwellenwert, Helligkeitsschwellenwert, Kontrastschwellenwert, Farbschwellenwert, überschreitet,
      derart zu erstellen, dass das in der zumindest einen Interaktionsumgebungs-Aufnahme enthaltene Abbild der einzelnen Interaktionselemente im Anzeigebild dargestellt wird,
   - einzelne Positionen auf der zumindest einen Interaktionsumgebungs-Aufnahme, dem Umgebungsbild, der Bildmaske und dem Anzeigebild einander zuzuordnen,
   - die zumindest eine Interaktionsumgebungs-Aufnahme und das bereitgestellte Umgebungsbild unter Verwendung der Bildmaske pixelweise zu überlagern, und
   - das derart überlagerte Bild als Anzeigebild an die Anzeigeeinheit zu übermitteln.

Eine besonders wirklichkeitsnahe Simulation einer Interaktion mit einer realen Simulationsumgebung kann erzielt werden, wenn die Simulationsanordnung für die Bereitstellung des Umgebungsbilds zumindest eine zweite, in einer Simulationsumgebung angeordnete, Bildaufnahmeeinheit umfasst, die dazu ausgebildet ist, zumindest eine, zumindest Teile einer Simulationsumgebung abbildende Simulationsumgebungs-Aufnahme, insbesondere zwei Simulationsumgebungs-Aufnahmen, zu erstellen,

wobei die Steuer- und Verarbeitungseinheit mit der zweiten Bildaufnahmeeinheit in Datenkommunikation steht und
wenn die Steuer- und Verarbeitungseinheit dazu ausgebildet ist,
- die Position der zweiten Bildaufnahmeeinheit in der Simulationsumgebung zu ermitteln,
- die zumindest eine zweite Bildaufnahmeeinheit anzusteuern, das Umgebungsbild aus der Simulationsumgebung abhängig von der Position der Person in der Interaktionsumgebung und der Position der zweiten Bildaufnahmeeinheit derart bereitzustellen, dass die Aufnahmebereiche der zumindest einen ersten Bildaufnahmeeinheit und der zumindest einen zweiten Bildaufnahmeeinheit miteinander gekoppelt sind,
- eine Abstandsinformation zwischen der zumindest einen zweiten Bildaufnahmeeinheit und der Simulationsumgebung zu ermitteln oder zu verarbeiten und positionsweise, insbesondere pixelweise, die Abstandsinformation den einzelnen Bildbereichen der zumindest einen Simulationsumgebungs-Aufnahme zuzuordnen
   und/oder
   positionsweise, insbesondere pixelweise, zumindest einen Bildparameterwert, insbesondere zumindest einen Bildparameterwert ausgewählt aus Bildschärfewert, Helligkeitswert, Kontrastwert, Farbwert der zumindest einen Simulationsumgebungs-Aufnahme zu ermitteln, und
- die Bildmaske durch zusätzliche Prüfung,
   - ob der im jeweiligen Bildbereich der zumindest einen Simulationsumgebungs-Aufnahme abgebildete Gegenstandsbereich der Simulationsumgebung einen vorgegebenen Simulationsumgebungs-Abstandsschwellenwert überschreitet
      und/oder
   - ob der jeweilige Bildbereich der zumindest einen Simulationsumgebungs-Aufnahme zumindest einen für die Simulationsumgebung vorgegebenen Bildparameter-Schwellenwert, insbesondere zumindest einen Bildparameter-Schwellenwert ausgewählt aus Bildschärfeschwellenwert, Helligkeitsschwellenwert, Kontrastschwellenwert, Farbschwellenwert, überschreitet,
zu erstellen,
- einzelne Positionen auf der zumindest einen Interaktionsumgebungs-Aufnahme, der Simulationsumgebungs-Aufnahme als Umgebungsbild, der Bildmaske und dem Anzeigebild einander zuzuordnen, und
- für die Erstellung des Anzeigebilds die zumindest eine Interaktionsumgebungs-Aufnahme und das bereitgestellte Umgebungsbild aus der Simulationsumgebung unter Verwendung der Bildmaske pixelweise zu überlagern.

Ein besonders exakter Abstandswert kann bereitgestellt werden, wenn die Simulationsanordnung zumindest einen auf einer Person, insbesondere der Anzeigeeinheit, und/oder einer Bildaufnahmeeinheit anordenbaren Abstandssensor umfasst, wobei insbesondere vorgesehen ist, dass der zumindest eine Abstandssensor dazu ausgebildet ist, ein Abstandsbild der Interaktionsumgebung und/oder der Simulationsumgebung zu erstellen.

Eine weitere Verbesserung der Genauigkeit der bereitgestellten Abstandsinformation kann erzielt werden, wenn die Simulationsanordnung mehrere verschiedenartige, insbesondere auf unterschiedlichen physikalischen Messprinzipien beruhende, Abstandssensoren umfasst und
wenn die Steuer- und Verarbeitungseinheit dazu ausgebildet ist, nach vorgegebenen Kriterien, insbesondere in Abhängigkeit von der Tageszeit, der Sonneneinstrahlung, der Umgebungsbeleuchtung, Oberflächeneigenschaften von Objekten in der Interaktionsumgebung und/oder der Simulationsumgebung, einen Abstandssensor für die Bereitstellung von Abstandsinformation für die Erstellung der Bildmaske auszuwählen.

Eine weitere Verbesserung der Möglichkeit für eine wirklichkeitsnahe Interaktion mit Interaktionselementen und Beeinflussung der Simulation kann gewährleistet werden, wenn die Steuer- und Verarbeitungseinheit dazu ausgebildet ist, ein erfindungsgemäßes Verfahren durchzuführen.

Weitere Vorteile und Ausgestaltungen ergeben sich aus der Beschreibung und den beiliegenden Zeichnungen.

Besonders vorteilhafte, aber nicht einschränkend zu verstehende Ausführungsbeispiele der Erfindung werden im Folgenden anhand der beiliegenden Zeichnungen schematisch dargestellt und unter Bezugnahme auf die Zeichnungen beispielhaft beschrieben.

Im Folgenden zeigen schematisch:
Fig. 1 eine Darstellung einer Interaktionsumgebung mit Interaktionselementen und einer Person bzw. einem Nutzer im Rahmen eines ersten Ausführungsbeispiels eines erfindungsgemäßen Verfahrens,
Fig. 2 ein Ausführungsbeispiel einer Interaktionsumgebungs-Aufnahme der Interaktionsumgebung aus Fig. 1,
Fig. 3 ein Ausführungsbeispiel eines bereitgestellten Umgebungsbilds im Rahmen des ersten Ausführungsbeispiels,
Fig. 4 ein Ausführungsbeispiel eines Anzeigebilds im Rahmen des ersten Ausführungsbeispiels,
Fig. 5 eine Darstellung einer Interaktionsumgebung mit Interaktionselementen und einer Person bzw. einem Nutzer im Rahmen eines zweiten Ausführungsbeispiels eines erfindungsgemäßen Verfahrens,
Fig. 6 zeigt ein Ausführungsbeispiel einer Simulationsumgebung mit einem Kran mit einer Kranführerkabine und einer darin angeordneten zweiten Bildaufnahmeeinheit,
Fig. 7 die Anordnung der zweiten Bildaufnahmeeinheit in der Kranführerkabine aus Fig. 6.

Wie bereits zuvor erwähnt, können ein erfindungsgemäßes Verfahren bzw. eine erfindungsgemäße Simulationsanordnung zur Darstellung einer Umgebung mittels einer an einer Person 1 angeordneten und für die Person 1 sichtbaren Anzeigeeinheit 2 besonders vorteilhaft eingesetzt werden, um Personen 1 im Umgang mit verschiedensten Geräten zu schulen oder die Reaktion der Person 1 in verschiedensten Verkehrssituation zu testen und das richtige Verhalten in den jeweiligen Situation zu schulen.

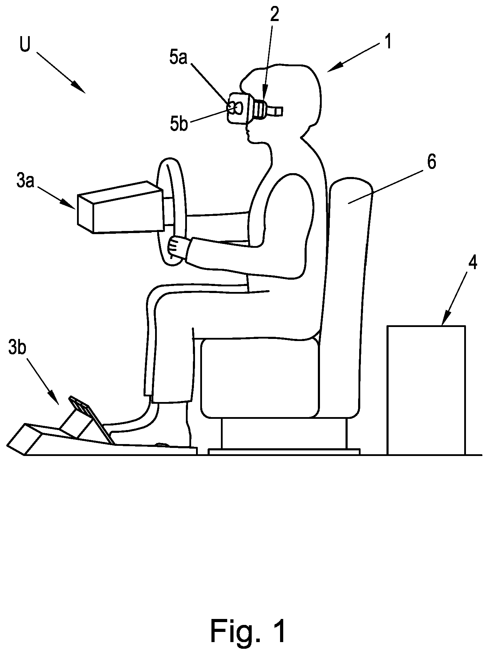

Fig. 1 bis 4 zeigen eine schematische Darstellung eines ersten Ausführungsbeispiels einer erfindungsgemäßen Simulationsanordnung bzw. eines erfindungsgemäßen Verfahrens in einer Interaktionsumgebung U, bei der es sich um ein Cockpit eines Automobils handelt. In der Interaktionsumgebung U sind eine Anzahl von betätigbaren Interaktionselementen 3a, 3b angeordnet. Im ersten Ausführungsbeispiel handelt es sich dabei um ein Lenkrad sowie ein Brems-, Kupplungs- und Gaspedal.

Die Simulationsanordnung umfasst im ersten Ausführungsbeispiel weiters eine Sitzgelegenheit 6 sowie eine Steuer- und Verarbeitungseinheit 4. Im ersten Ausführungsbeispiel sitzt eine Person 1 auf der Sitzgelegenheit 6. Diese Person 1, d.h. der Nutzer der Simulation, trägt eine an einer Person 1 anordenbare Anzeigeeinheit 2, bei der es sich im ersten Ausführungsbeispiel um eine 3D-Brille zur Anzeige von Anzeigebildern C für den Nutzer handelt, die nicht durchsichtig ist. Die Anzeigeeinheit 2 zeigt im Rahmen der Simulation ein Anzeigebild C für die Person 1 an.

Wie im ersten Ausführungsbeispiel schematisch angedeutet ist, handelt es sich bei der Simulation im ersten Ausführungsbeispiel um eine möglichst realistische Darstellung einer Straßenverkehrsumgebung, in der der Nutzer der Simulation, d.h. die Person 1, mittels der Interaktionselemente 3a, 3b, die mit der Steuer- und Verarbeitungseinheit 4 verbunden sind, auf die Simulation Einfluss nehmen und beispielsweise virtuell ein Auto durch eine simulierte, virtuelle Straßenverkehrssituation bewegen kann.

Eine erfindungsgemäße Simulationsanordnung umfasst zumindest eine erste Bildaufnahmeeinheit 5, die dazu ausgebildet ist, zu einem jeweiligen Aufnahmezeitpunkt eine Interaktionsumgebungs-Aufnahme A zumindest von Teilen der Interaktionsumgebung U zu erstellen.

Die Simulationsanordnung im ersten Ausführungsbeispiel umfasst zwei erste Bildaufnahmeeinheiten 5a, 5b, bei denen es sich um Digitalkameras handelt. Alternativ dazu kann auch z.B. eine Stereokamera vorgesehen sein. Die beiden ersten Bildaufnahmeeinheiten 5a, 5b sind im ersten Ausführungsbeispiel an der Person 1, d.h. konkret an der Anzeigeeinheit 2, die die Person 1 trägt, angeordnet. Der Aufnahmebereich der ersten Bildaufnahmeeinheiten 5a, 5b ist dabei auf Augenhöhe der Person 1 vom Kopf der Person 1 weg ausgerichtet. Bewegt die Person 1 ihren Kopf, verändert sich jeweils der Aufnahmebereich der ersten Bildaufnahmeeinheiten 5a, 5b und es werden entsprechend dem jeweiligen Aufnahmebereich Interaktionsumgebungs-Aufnahmen A der Interaktionsumgebung U bereitgestellt. Die Anzeigeeinheit 2, die Interaktionselemente 3a, 3b sowie die beiden ersten Bildaufnahmeeinheiten 5a, 5b stehen in Datenkommunikation mit der Steuer- und Verarbeitungseinheit 4. Dies kann beispielsweise über eine Kabel-, Funk- oder WLAN-Verbindung erzielt werden.

Um ein möglichst realistisches Umgebungsbild B, beispielsweise ein virtuelles Umgebungsbild einer Straßenkreuzung, bereitzustellen, das den Blickwinkel aus der Position der Person 1 in der Interaktionsumgebung U entspricht, ermittelt die Steuer- und Verarbeitungseinheit 4 zunächst die Position der Person 1. Dies kann mit Hilfe zumindest einer der ersten Bildaufnahmeeinheit 5a, 5b geschehen, die, z.B. anhand von bestimmten Referenzpunkten im Raum, eine relative Position berechnen können, was als Inside-Out Tracking bezeichnet wird. Alternativ kann die Position der Person 1 z.B. anhand einer externen Einheit, bspw. einer weiteren Bildaufnahmeeinheit oder einem Sendegerät für bspw. Infrarotlicht, das die absolute Position im Raum errechnen kann.

Anschließend wird eine Bildmaske für die Erstellung des Anzeigebilds C, das von der Anzeigeeinheit 2 angezeigt werden soll, bereitgestellt. Dazu kann beispielsweise zumindest ein Abstandssensor z.B. an der Person 1 oder relativ zu ihr angeordnet sein der den Abstand der Person 1 zur Interaktionsumgebung U, beispielsweise zu einem der Interaktionselemente 3a, 3b im Cockpit, misst und an die Steuer- und Verarbeitungseinheit 4 übermittelt.

Im ersten Ausführungsbeispiel ist ein derartiger Abstandssensor in der Anzeigeeinheit 2 integriert. Alternativ dazu kann der Abstandssensor anderweitig z.B. an der Kleidung der Person 1 befestigt sein, oder beispielsweise mittels eines Fixierungsgurts. Alternativ dazu kann sich ein derartiger Abstandssensor auch in der näheren Umgebung der Person befinden bzw. neben oder über der Person 1 in der Interaktionsumgebung U an einer Haltevorrichtung montiert sein.

Sind wie im ersten Ausführungsbeispiel zwei erste Bildaufnahmeeinheiten 5a, 5b vorhanden, kann alternativ dazu die Steuer- und Verarbeitungseinheit 4 auch anhand der von den ersten Bildaufnahmeeinheit 5a, 5b breitgestellten Interaktionsumgebungs-Aufnahmen A diese Interaktionsumgebungs-Abstandsinformationen ermitteln. Dazu kann beispielsweise eine Stereoüberlagerung der von den beiden ersten Bildaufnahmeeinheiten 5a, 5b bereitgestellten RGB-Bilddaten der Interaktionsumgebungs-Aufnahmen A durchgeführt werden.

Die Steuer- und Verarbeitungseinheit 4 stellt nun die Position der Person 1 in der Interaktionsumgebung U fest und ordnet die Interaktionsumgebungs-Abstandsinformationen den einzelnen Bildbereichen der Interaktionsumgebungs-Aufnahme A zu.

Zusätzlich oder alternativ dazu ist es möglich, dass die Steuer- und Verarbeitungseinheit 4 positionsweise, d.h. beispielsweise pixelweise, zumindest einen Bildparameterwert der einzelnen Bildbereiche der zumindest einen Interaktionsumgebungsaufnahme A ermittelt. Derartige Bildparameterwerte sind beispielsweise Bildschärfewert, Helligkeitswert, Kontrastwert oder ein Farbwert.

Diese Zuordnung von Abstandsinformationen und/oder von Bildparameterwerten zu Bildbereichen der Interaktionsumgebungs-Aufnahme A bildet die Grundlage für die Erstellung einer Bildmaske, die für die Erstellung des Anzeigebilds C verwendet wird. Die Bildmaske wird dabei derart erstellt, dass das in der zumindest einen Interaktionsumgebungs-Aufnahme A enthaltene Abbild der einzelnen Interaktionselemente 3a, 3b im Anzeigebild C dargestellt wird.

Einzelne Positionen auf der Interaktionsumgebungs-Aufnahme A, dem Umgebungsbild B, der Bildmaske und dem Anzeigebild C sind einander so zugeordnet, dass die Interaktionsumgebungs-Aufnahme A und das Umgebungsbild B überlagert ein Anzeigebild C ergeben, dass bei Darstellung durch die Anzeigeeinheit 2 im Blickmittelpunkt der Anzeigeeinheit 2 scharf, also nicht verschwommen, ist und keine Doppelbilder in diesem Bereich sichtbar sind. Dazu können die Aufnahmen z.B. der virtuellen und realen Umgebung, d.h. die Interaktionsumgebungs-Aufnahme A und das Umgebungsbild B und der Bildmaske B vorteilhafterweise gleich groß sein, sodass die Zuordnung bzw. Positionierung der einzelnen Bildbereiche bzw. Pixel zueinander besonders einfach ist. Bei beliebiger, auch verschiedener Größe der Interaktionsumgebungs-Aufnahme A, des Umgebungsbilds B und der Bildmaske B, kann die Zuordnung deren einzelner Bildbereiche bzw. Pixel zumindest dahingehend, festgelegt werden, dass der Bildmittelpunkt der Aufnahmen bzw. der Bildmaske die gleiche Position "belegt" und daraus die weiteren Positionen errechnet werden können. Gegebenenfalls kann die Steuer- und Verarbeitungseinheit 4 auch noch zusätzlich eine entsprechende Entzerrung und/oder weiterführende Bilddatenverarbeitung vornehmen.

Die Bildmaske dient also der Festlegung, welche Bildbereiche der Interaktionsumgebungs-Aufnahme A und welche Bereiche eines bereitgestellten Umgebungsbilds B im Anzeigebild C, das der Person 1 von der Anzeigeeinheit 2 angezeigt wird, dargestellt werden.

Vereinfacht gesprochen, gibt es also nach Anwendung der Bildmaske Bildpunkte bzw. Bildbereiche, in der Interaktionsumgebungs-Aufnahme A bzw. dem virtuellen oder realen Umgebungsbild B, die von dieser Bildmaske eingeschlossen sind bzw. zu der Menge der durch die Bildmaske definierten Bildpunkte bzw. Bildbereiche zählen und daher für die Person 1 sichtbar sind, und Bildpunkte bzw. Bildbereiche, die von der Bildmaske ausgeschlossen werden und daher nicht für die Person 1 sichtbar sind.

Dabei kann die Bildmaske optional auch zumindest teilweise eine vorgegebene Transparenz aufweisen, was dazu führt, dass von der Bildmaske eingeschlossene Bildpunkte bzw. Bildbereiche mit einer vorgegebenen Gewichtung in das Anzeigebild C einfließen.

Dabei kann die Bildmaske, beispielsweise durch Prüfung, ob der im jeweiligen Bildbereich der Interaktionsumgebungs-Aufnahme A abgebildete Gegenstandsbereich der Interaktionsumgebung U einen vorgegebenen Interaktionsumgebungs-Abstandswert überschreitet, erstellt werden. Ein derartiger Interaktionsumgebungs-Abstandsschwellenwert kann beispielsweise vor der Durchführung der Simulation in der Steuer- und Verarbeitungseinheit 4 hinterlegt werden.

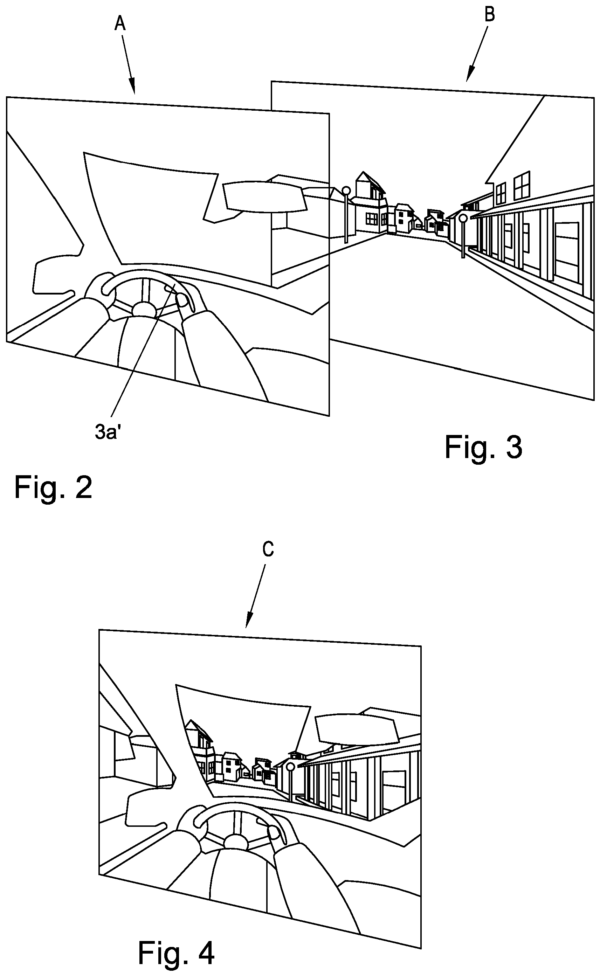

Wird wie im ersten Ausführungsbeispiel ein derartiger Interaktionsumgebungs-Abstandsschwellenwert für die Erstellung der Bildmaske herangezogen, so wird überprüft, ob die einzelnen Bildbereiche der Interaktionsumgebungs-Aufnahme A weiter als beispielsweise 50 cm von der Person 1 entfernt sind. Die Bildmaske wird in diesem Fall so bereitgestellt, dass diejenigen Bildbereiche der Interaktionsumgebungs-Aufnahme A, die weiter als 50 cm von der Person 1 entfernt sind, nicht im Anzeigebild C dargestellt werden, während diejenigen Bildbereiche , die weniger als 50 cm entfernt sind, dargestellt werden. So sind im Anzeigebild C (siehe Fig. 4) die Abbilder 3a' des Interaktionselements 3a bzw. des Lenkrads, sowie die Abbilder des Armaturenbretts, der Rückspiegel, der Seitenspiegel, sowie Teile des Autodachs und der A-Säule der Interaktionsumgebung U bzw. des Cockpits, sowie auch die Abbilder der Hände der Person 1 sichtbar.

Zusätzlich oder alternativ dazu kann für die Erstellung der Bildmaske überprüft werden, ob der jeweilige Bildbereich der Interaktionsumgebungs-Aufnahme A zumindest einen für die Interaktionsumgebung U vorgegebenen Bildparameterschwellenwert überschreitet. Ein derartiger Bildparameterschwellenwert kann beispielsweise ein Bildschärfe-, Helligkeits-, Kontrast- oder Farbschwellenwert sein und vor der Durchführung der Simulation in der Steuer- und Verarbeitungseinheit 4 hinterlegt werden.

Wenn beispielsweise ein Bildschärfeschwellenwert bei der Erstellung der Bildmaske verwendet wird, so kann überprüft werden, ob ein jeweiliger Bildbereich scharf dargestellt wird, sodass nur scharf abgebildete Bereiche der Interaktionsumgebung U, die sich beispielsweise nahe an der Person 1 befinden, im Anzeigebild C enthalten sind, während unscharfe Bereiche, die weiter entfernt sind, nicht im Anzeigebild C enthalten sind.

Optional ist es auch möglich, dass beispielsweise ein Farbschwellenwert bei der Erstellung der Bildmaske verwendet wird, sodass beispielsweise Objekte, die eine bestimmte Farbe aufweisen, nicht im Anzeigebild C enthalten sind, oder dass gerade Objekte, die eine bestimmte Farbe aufweisen, im Anzeigebild C dargestellt werden. Optional ist es auch möglich, dass zusätzlich oder alternativ dazu ein Helligkeits- und/oder Kontrastwellenwert bei der Erstellung der Bildmaske verwendet wird, sodass beispielsweise Objekte, die eine bestimmte Helligkeit bzw. einen vorgegebenen Kontrast aufweisen, nicht im Anzeigebild C enthalten sind.

Um nun im ersten Ausführungsbeispiel eine möglichst realistische Verkehrssituation für die Person 1 im Rahmen der Simulation anzuzeigen, wird von der Steuer- und Verarbeitungseinheit 4, abgestimmt auf die Position der Person 1, ein Umgebungsbild B, wie dies schematisch in Fig. 3 dargestellt ist, vorgegeben. Im ersten Ausführungsbeispiel handelt es sich bei diesem Umgebungsbild B um ein von der Steuer- und Verarbeitungseinheit 4 bereitgestelltes Abbild einer virtuellen Umgebung. Beim Umgebungsbild B in Fig. 3 handelt es sich beispielsweise um einen virtuellen Straßenverlauf in einem Siedlungsgebiet. Alternativ dazu kann auch ein Umgebungsbild B vorgegeben werden, das aus einer realen Umgebung stammt.

Für die Erstellung des Anzeigebilds C wird prinzipiell zumindest eine Interaktionsumgebungs-Aufnahme A mit dem bereitgestellten Umgebungsbild B unter Verwendung der Bildmaske pixelweise zu einem einzigen Bild überlagert. Stehen wie im ersten Ausführungsbeispiel zwei Interaktionsumgebungs-Aufnahmen A von zwei ersten Bildaufnahmeeinheiten 5a, 5b zur Verfügung, können diese z.B. mit einer gemeinsamen Bildmaske oder zwei separaten Bildmasken und zwei Umgebungsbildern B so übereinander gelegt, dass zwei Anzeigebilder C, nämlich eines für jedes Auge des Nutzers, bereitgestellt werden. D.h. die Zusammenführung der jeweiligen Interaktionsumgebungs-Aufnahme A mit dem jeweiligen Umgebungsbild B zu einem Anzeigebild C unter Anwendung der Bildmaske kann für jede Bildaufnahmeeinheit 5a, 5b separat durchgeführt werden. Alternativ dazu ist es auch möglich, dass eine einzige gemeinsame Interaktionsumgebungs-Aufnahme A aus den Aufnahmen beider ersten Bildaufnahmeeinheiten 5a, 5b erstellt und weiterverarbeitet wird.

Da das Umgebungsbild B in Abhängigkeit von der Position der Person 1 in der Interaktionsumgebung U ermittelt wird und mit einem Ausschnitt aus der Interaktionsumgebungs-Aufnahme A überblendet wird, ergibt sich für die Person 1 ein besonders realistisches Anzeigebild C, wie dies in Fig. 4 dargestellt ist. Sind wie im ersten Ausführungsbeispiel auch die Hände der Person 1 und Interaktionselemente 3a, 3b wie das Lenkrad der Interaktionsumgebung U sichtbar, hilft dies der Person 1 bei der räumlichen Orientierung während der Simulation und gibt der Person 1 die Möglichkeit, gezielt auf die von der Anzeigeeinheit 2 dargestellte Verkehrssituation zu reagieren. Somit wird im ersten Ausführungsbeispiel nicht nur eine realistische Simulation einer Verkehrssituation erzielt, sondern auch ein realistisches räumliches Empfinden gewährleistet, was verhindert, dass sich die Person 1 während der Simulation unwohl fühlt.

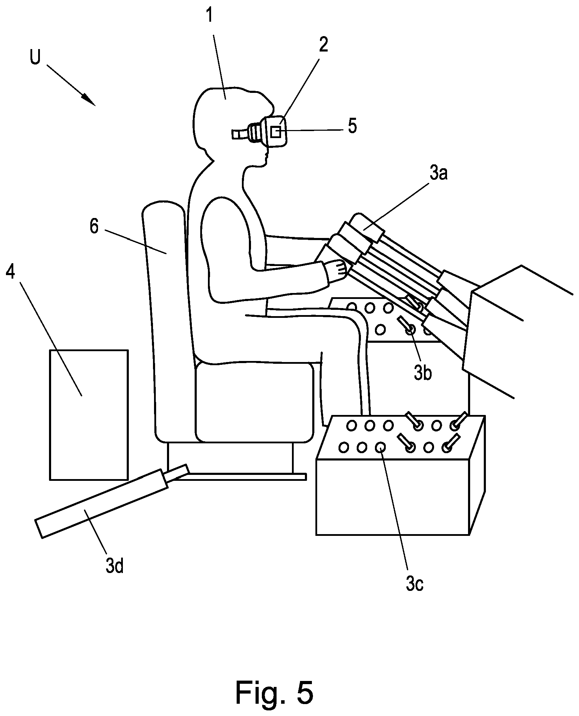

Anhand der Fig. 5 bis 7 wird ein zweites Ausführungsbeispiel eines erfindungsgemäßen Verfahrens bzw. einer erfindungsgemäßen Simulationsanordnung beschrieben. Fig. 5 zeigt ein zweites Ausführungsbeispiel einer Interaktionsumgebung U, die beispielsweise zur Simulation der Bedienung eines Krans aus einer Kranführerkabine dient.

Wie im ersten Ausführungsbeispiel sind in der Interaktionsumgebung U Interaktionselemente 3a, ..., 3d angeordnet, bei denen es sich um Schalthebel und Bedienungsknöpfe, wie sie für die Bedienung eines Krans erforderlich sind, handelt. Die Simulationsanordnung umfasst weiters eine Sitzgelegenheit 6, auf der eine Person 1 schematisch dargestellt ist. Die Person 1 trägt eine Anzeigeeinheit 2, bei der es sich im zweiten Ausführungsbeispiel um eine 3D-Brille handelt, die empfangene Anzeigebilder C für die Person 1 darstellt. Auf der Anzeigeeinheit 2 ist auf Höhe der Augen der Person eine einzelne erste Bildaufnahmeeinheit 5 angeordnet. Bei der ersten Bildaufnahmeeinheit 5 handelt es sich im zweiten Ausführungsbeispiel um eine Stereokamera. Weiters umfasst die Simulationsanordnung im zweiten Ausführungsbeispiel eine Steuer- und Verarbeitungseinheit 4. Diese steht wie im ersten Ausführungsbeispiel mit der Anzeigeeinheit 2 der ersten Bildaufnahmeeinheit 5 sowie den Interaktionselementen 3a, ..., 3d in Datenkommunikation.

Im zweiten Ausführungsbeispiel umfasst die Simulationsanordnung für die Bereitstellung des Umgebungsbild C zusätzlich eine zweite, in einer räumlich von der Interaktionsumgebung U getrennten Simulationsumgebung S angeordnete, Bildaufnahmeeinheit 51. Die zweite Bildaufnahmeeinheit 51 ist dazu ausgebildet, zumindest eine Simulationsumgebungs-Aufnahme zu erstellen, in der zumindest Teile der Simulationsumgebung S abgebildet sind. Da es sich im zweiten Ausführungsbeispiel bei der zweiten Bildaufnahmeeinheit 51 um eine Stereokamera handelt, werden zwei Simulationsumgebungsaufnahmen bereitgestellt, die zu einem Umgebungsbild B der Simulationsumgebung S zusammengeführt werden. Die Steuer- und Verarbeitungseinheit 4 steht auch mit der zweiten Bildaufnahmeeinheit 51 in Datenkommunikation.

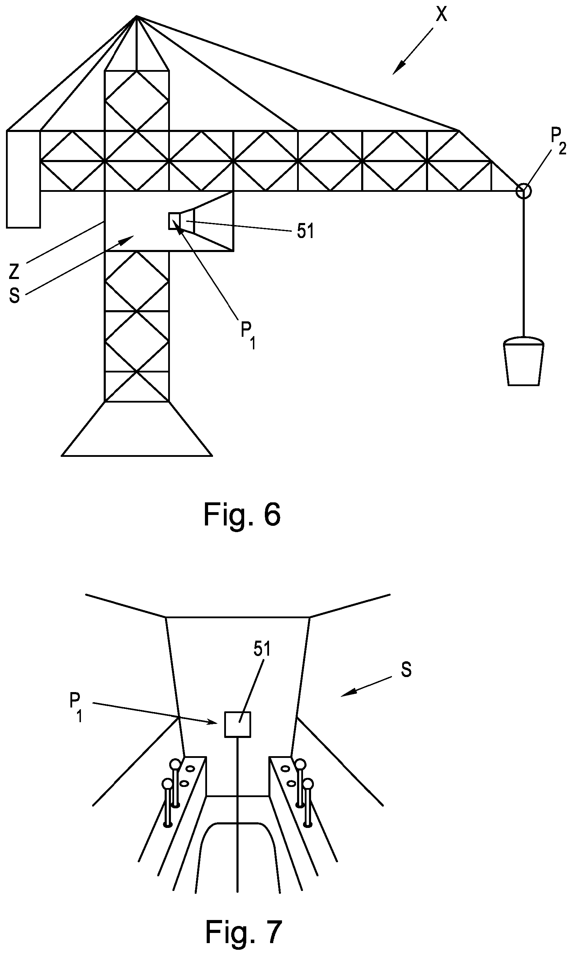

Wie in Fig. 6 ersichtlich ist, ist die zweite Bildaufnahmeeinheit 51, die für die Bereitstellung des Umgebungsbilds B Simulationsumgebungs-Aufnahmen liefert, real in einer Kranführerkabine Z eines Krans X an einer Position P₁ angeordnet. Alternativ dazu ist auch möglich, die zweite Bildaufnahmeeinheit 51 an einer beliebigen anderen Position des Krans, beispielsweise an der Position P₂ direkt über der anzuhebenden Last, zu platzieren.

Fig. 7 zeigt eine schematische Detailansicht der Anordnung der zweiten Bildaufnahmeeinheit 51 an der Position P₁ in der Simulationsumgebung S. Die zweite Bildaufnahmeeinheit 51 ist in Fig. 7 an einer Rotations- und Schwenkvorrichtung in einer Höhe über der Sitzgelegenheit für einen Kranführer angeordnet, die etwa der Höhe des Kopfes einer auf der Sitzgelegenheit sitzenden Person 1 entspricht. Die zweite Bildaufnahmeeinheit 51 ist derart ausgerichtet, dass der Aufnahmebereich der Blickrichtung einer auf der Sitzgelegenheit sitzenden Person 1 aus der Kranführerkabine Z hinaus entspricht. Die von der zweiten Bildaufnahmeeinheit 2 erstellte Simulationsumgebungs-Aufnahme enthält daher Abbilder derjenigen Gegenstände und Umgebungsbereiche, die außerhalb der Kranführerkabine Z für eine Person 1 sichtbar sind.

Beim Ausführungsbeispiel der Simulationsumgebung S in Fig. 6 wären dies beispielsweise ein Blick auf das Hubseil und die Tragmittel oder Lastaufnahmemittel des Krans sowie gegebenenfalls eine daran befestigte Last.

Die Steuer- und Verarbeitungseinheit 4 der Simulationsanordnung steht mit der zweiten Bildaufnahmeeinheit 51 ebenfalls in Datenkommunikation. Dies kann beispielsweise über eine Funk- oder WLAN-Verbindung erzielt werden. Für die Erstellung des Anzeigebilds C ermittelt die Steuer- und Verarbeitungseinheit 4 nicht nur wie im ersten Ausführungsbeispiel die Position der Person 1 in der Interaktionsumgebung U, sondern auch die Position der zweiten Bildaufnahmeeinheit 51 in der Simulationsumgebung S. Die Ermittlung der Position der zweiten Bildaufnahmeeinheit 51 kann dabei, wie im ersten Ausführungsbeispiel für die Position der Person 1 in der Interaktionsumgebung U beschrieben, erfolgen.

Die Steuer- und Verarbeitungseinheit 4 steuert die zweite Bildaufnahmeeinheit 51 zur Bereitstellung eines Umgebungsbilds B an. Abhängig von der Position der Person 1 in der Interaktionsumgebung U und der Position der zweiten Bildaufnahmeeinheit 51 in der Simulationsumgebung S ist zumindest eine Simulationsumgebungs-Aufnahme derart bereitzustellen, dass die Aufnahmebereiche der ersten Bildaufnahmeeinheit 5 und der zweiten Bildaufnahmeeinheit 51 miteinander gekoppelt sind. Gekoppelt bedeutet in diesem Zusammenhang, dass die Ausrichtungen der ersten Bildaufnahmeeinheit 5 und der zweiten Bildaufnahmeeinheit 51 gleich sind, sodass beispielsweise wenn die Person 1 in der Interaktionsumgebung U ihren Kopf dreht, eine entsprechende Drehung auch von der zweiten Bildaufnahmeeinheit 51 in der Simulationsumgebung S ausgeführt wird.

Zusätzlich zur Interaktionsumgebungs-Abstandsinformation zwischen der Person 1 und der Interaktionsumgebung U wird eine Simulationsumgebungs-Abstandsinformation zwischen der zweiten Bildaufnahmeeinheit 51 und der Simulationsumgebung S ermittelt. Dies kann wie im ersten Ausführungsbeispiel über einen Abstandssensor erfolgen, der an der zweiten Bildaufnahmeeinheit 51 angeordnet ist oder rechnerisch von der Steuer- und Verarbeitungseinheit 4 anhand der Simulationsumgebungs-Aufnahme ermittelt werden.

Wie im ersten Ausführungsbeispiel können für die Erstellung der Bildmaske diese Simulationsumgebungs-Abstandsinformationen den einzelnen Bildbereichen der Simulationsumgebungs-Aufnahme zugeordnet werden. Zusätzlich oder alternativ dazu ist es wie auch im ersten Ausführungsbeispiel möglich, dass die Steuer- und Verarbeitungseinheit 4 positionsweise beispielsweise pixelweise einen Bildparameterwert der einzelnen Bildbereiche der zumindest einen Simulationsumgebungs-Aufnahme für die Erstellung der Bildmaske ermittelt.

Die Bildmaske wird dabei, wie im ersten Ausführungsbeispiel beschrieben, derart bereitgestellt, dass einzelne Positionen auf der zumindest einen Interaktionsumgebungs-Aufnahme U, die die erste Bildaufnahmeeinheit 5 liefert, auf der zumindest einen Simulationsumgebungs-Aufnahme, die die zweite Bildaufnahmeeinheit 51 liefert, auf der Bildmaske und auf dem Anzeigebild C einander zugeordnet sind.

Für die Bereitstellung der Bildmaske wird zusätzlich zu den Schritten im ersten Ausführungsbeispiel beispielsweise geprüft, ob der im jeweiligen Bildbereich der Simulationsumgebungs-Aufnahme abgebildete Gegenstandsbereich der Simulationsumgebung S einen vorgegebenen Simulationsumgebungs-Abstandswert überschreitet und zusätzlich oder alternativ dazu, ob der jeweilige Bildbereich der Simulationsumgebungs-Aufnahme einen für die Simulationsumgebung S vorgegebenen Bildparameter-Schwellenwert überschreitet.

Für die Erstellung des Anzeigebilds C, das von der Anzeigeeinheit 2 für die Person 1 angezeigt wird, werden im zweiten Ausführungsbeispiel die zumindest eine Interaktionsumgebungs-Aufnahme A und das bereitgestellte Umgebungsbild B, das aus der Simulationsumgebung S stammt, unter Verwendung der Bildmaske pixelweise überlagert.

Im zweiten Ausführungsbeispiel wird, beispielsweise wie im ersten Ausführungsbeispiel, ein Interaktionsumgebungs-Abstandsschwellenwert vorgegeben und für die Erstellung der Bildmaske derjenige Bereich der Interaktionsumgebung U mit den Interaktionselementen 3a, ... 3d sowie den Händen der Person 1 im Anzeigebild C angezeigt, weil die Bildbereiche, die diese Elemente enthalten, einen für die Interaktionsumgebung U vorgegebenen Abstandsschwellenwert unterschreiten.

Im zweiten Ausführungsbeispiel werden diejenigen Bildbereiche aus dem Umgebungsbild B aus der Simulationsumgebung S für die Ergänzung zu einem Anzeigebild C herangezogen, in denen diejenigen Bereiche der Simulationsumgebung S abgebildet sind, die einen für die Simulationsumgebung S vorgegebenen Abstandsschwellenwert überschreiten. Dieser für die Simulationsumgebung S vorgegebene Abstandsschwellenwert kann dabei an den für die Interaktionsumgebung U vorgegebenen Abstandsschwellenwert angepasst sein, sodass im Anzeigebild C diejenigen Bereiche aus der Simulationsumgebung S eingeblendet werden, die beispielsweise weiter als 50 cm von der Person 1 entfernt sind. So sind im zweiten Ausführungsbeispiel im Anzeigebild C die Interaktionselemente 3a, ..., 3d, d.h. die Steuerhebel und -knöpfe aus der Interaktionsumgebung U, enthalten, während die Person 1 den Eindruck erhält, aus der Kranführerkabine Z hinaus zu blicken und den Kran X aus der Kranführerkabine Z aus zu steuern.

Bei allen Ausführungsformen einer erfindungsgemäßen Simulationsanordnung bzw. eines erfindungsgemäßen Verfahrens können mehrere verschiedenartige, beispielsweise auf unterschiedlichen physikalischen Messprinzipien beruhende oder mit unterschiedlichen Sensitivitäten versehene Abstandssensoren, wie Time-of-Flight-Sensoren, Sensoren für Laserabstandsmessung, Ultraschallsensoren, beispielsweise an oder relativ zur Person 1 und/oder der zweiten Bildaufnahme 51 angeordnet sein. Dabei kann beispielsweise jeder einzelne der Sensoren ein Abstandsbild der Interaktionsumgebung U bzw. der Simulationsumgebung S erstellen.

In diesem Fall kann die Steuer- und Verarbeitungseinheit 4 nach vorgegebenen Kriterien beispielsweise abhängig von der Tageszeit, der Sonneneinstrahlung der Umgebungsbeleuchtung, der Oberflächenbeschaffenheit, Struktur und Reflektivität der aufgenommenen Gegenstände etc., denjenigen Abstandssensor für die Bereitstellung der Abstandsinformation für die Erstellung der Bildmaske auswählen, der in der aktuellen Situation die zuverlässigsten Abstandsinformationen liefert.

In diesem Fall ist es auch möglich, dass die von mehreren Sensoren bereitgestellten Abstandsinformationen als Grundlage für die Erstellung einer Gesamtbildmaske herangezogen werden. Für die Erstellung einer derartigen Gesamtbildmaske werden die Abstandsinformationen z.B. durch arithmetische Funktionen oder/und computer- bzw elektronikgestützte Methoden wie Kalman-Filter, Neuronale Netzwerke, Support Vector Machines oder Berechnung eines gewichteten Mittels verarbeitet und den einzelnen Bildbereichen der Interaktions- und/oder Simulationsumgebungs-Aufnahmen, insbesondere pixelweise, zugewiesen.

Wie zuvor bereits erwähnt, können die Bildparameterwerte, die erfindungsgemäß für die Erstellung der Bildmaske herangezogen werden können, beispielsweise Bildschärfe, Helligkeit, der Kontrast oder ein Farbwert sein. Für die Erstellung der Bildmaske und um rechnerisch besonders einfach und zeitsparend zu ermitteln, ob bzw. in welchem Ausmaß die zumindest eine Interaktionsumgebungs-Aufnahme A und/oder das bereitgestellte Umgebungsbild B für die Erstellung des Anzeigebilds C herangezogen werden, kann ein Schwellenwertvergleich durchgeführt werden. Dies trifft auch zu, wenn Abstandsinformationen und ein Abstandsschwellenwert für die Erstellung der Bildmaske verwendet werden.

Das Ermitteln eines Bildparameterwerts und die Vorgabe eines Bildparameter-Schwellenwerts sind besonders vorteilhaft, wenn Objekte in der Interaktionsumgebungs-Aufnahme A bzw. der Simulationsumgebungs-Aufnahme ermittelt werden sollen, deren Oberfläche eine vorgegebene oberflächlich erkennbare Eigenschaft wie beispielsweise Helligkeit oder Farbe aufweisen. Die im Anzeigebild C anzuzeigenden Bildbereiche können in diesem Fall vorteilhaft festgelegt werden, indem diejenigen Objekte entweder dargestellt oder ausgeschlossen werden, die diesen vorgegebenen Bildparameterkriterien entsprechen.

Für die Untersuchung, ob ein Bildbereich der zumindest einen Interaktionsumgebungs-Aufnahme A bzw. der Simulationsumgebungs-Aufnahme einen jeweils vorgegebenen Abstandsschwellenwert überschreitet, kann auch ein Hüllobjekt in Bezug auf die Interaktionsumgebung U und/oder die Simulationsumgebung S festgelegt werden. Ein derartiges Hüllobjekt kann beispielsweise mit Hilfe von bool'schen Mengenoperationen festgelegt werden. Hierbei wird z.B. eine Funktion definiert, die auf jede Position bzw. auf jeden Bildwert einer Aufnahme oder Umgebung derartig angewandt wird, dass für jeden Wert bzw. jede Position ein Ergebnis vorliegt, welches eine Aussage über die Anzeige und Darstellung und Darstellungsform erlaubt.

Ein für die Person 1 besonders realistisches Anzeigebild C, das weitestgehend frei von unerwünschten Bildkanten und Übergängen ist, kann bereitgestellt werden, wenn die Steuer- und Verarbeitungseinheit 4 das Anzeigebild C beispielsweise unter Verwendung von Alpha Blending erstellt. Dabei handelt es sich um einen Vorgang der Rasterung, welche zwei Farben oder Bilder derart überlagert, dass Teile der Bilder derart übereinander gelegt und gemischt werden, sodass der Eindruck entsteht, dass Teile des einen Bildes transparent wären und das jeweils andere Bild durchscheinen lassen. Ein Beispiel dafür ist der Porter-Duff Algorithmus.

Dabei wird die Transparenz der Bildpixel innerhalb einer Überblendungszone, die in einem vorgegebenen Abstandsbereich um den Interaktionsumgebungs-Abstandsschwellenwert bzw. den Simulationsumgebungs-Abstandsschwellenwert beispielsweise nach einer vorgegebenen linearen oder exponentiellen Funktion vorgegeben. Direkt an der Nahtstelle, an der die Interaktionsumgebungs-Aufnahme A bzw. das Umgebungsbild B aus der Simulationsumgebung S zu einem Anzeigebild C zusammengeführt werden, kann die Transparenz beider Aufnahmen beispielsweise gleich eingestellt werden.

In Bildbereichen des Anzeigebilds C, die räumlich näher an der Person 1 liegende Umgebungsbereiche abbilden, kann die Transparenz z.B. der Interaktionsumgebungs-Aufnahme A geringer gewählt sein, als die Transparenz des Umgebungsbilds B aus der Simulationsumgebung S. In denjenigen Bildbereichen, die räumlich weiter von der Person 1 entfernte Umgebungsbereiche abbilden, kann die Transparenz des Umgebungsbilds B aus der Simulationsumgebung S geringer gewählt sein, als die der Interaktionsumgebungs-Aufnahme A.

Zusätzlich kann die Steuer- und Verarbeitungseinheit 4 auch noch eine Glättung der Bildmaske im Überlagerungsbereich der Interaktionsumgebungs-Aufnahme A und des Umgebungsbilds B vornehmen, sodass die Qualität des Anzeigebilds C weiter erhöht wird.

## Patentansprüche

1. Verfahren zur Darstellung einer Umgebung mittels einer an einer Person (1) angeordneten und für die Person (1) sichtbaren Anzeigeeinheit (2), insbesondere mittels einer 3D-Brille, als Anzeigebild (C) im Rahmen einer Simulation,
- wobei die Simulation in einer Interaktionsumgebung (U), insbesondere einem Cockpit, durchgeführt wird, wobei in der Interaktionsumgebung (U) eine Anzahl von betätigbaren Interaktionselementen (3a, ..., 3d) angeordnet sind und wobei die Simulation mittels der Interaktionselemente (3a, ..., 3d) beeinflussbar ist,
- wobei zumindest eine, zumindest Teile der Interaktionsumgebung (U) abbildende, Interaktionsumgebungs-Aufnahme (A), insbesondere zwei Interaktionsumgebungs-Aufnahmen (A), mittels zumindest einer ersten, auf der Person (1) oder relativ zur Person (1) angeordneten, Bildaufnahmeeinheit (5; 5a, 5b) erstellt wird,
- wobei die Position der Person (1) in der Interaktionsumgebung (U) ermittelt wird und abhängig von der Position der Person (1) ein Umgebungsbild (B) aus einer virtuellen und/oder realen Umgebung bereitgestellt wird,
- wobei eine Bildmaske bereitgestellt wird,
- wobei einzelne Positionen auf der zumindest einen Interaktionsumgebungs-Aufnahme (A), dem Umgebungsbild (B), der Bildmaske und dem Anzeigebild (C) einander zugeordnet sind,
- wobei eine Interaktionsumgebungs-Abstandsinformation zwischen der Person (1) und der Interaktionsumgebung (U) ermittelt wird und positionsweise, insbesondere pixelweise, die Interaktionsumgebungs-Abstandsinformation den einzelnen Bildbereichen der zumindest einen Interaktionsumgebungs-Aufnahme (A) zugeordnet wird, und
positionsweise, insbesondere pixelweise, zumindest ein Bildparameterwert, insbesondere ein Bildparameterwert ausgewählt aus Bildschärfewert, Helligkeitswert, Kontrastwert, Farbwert, der einzelnen Bildbereiche der zumindest einen Interaktionsumgebungs-Aufnahme (A) ermittelt wird und
- wobei die Bildmaske durch Prüfung,
- ob der im jeweiligen Bildbereich der zumindest einen Interaktionsumgebungs-Aufnahme (A) abgebildete Gegenstandsbereich der Interaktionsumgebung (U) einen vorgegebenen Interaktionsumgebungs-Abstandsschwellenwert überschreitet,
und
- ob der jeweilige Bildbereich der zumindest einen Interaktionsumgebungs-Aufnahme (A) zumindest einen für die Interaktionsumgebung vorgegebenen Bildparameter-Schwellenwert, insbesondere zumindest einen Bildparameter-Schwellenwert ausgewählt aus Bildschärfeschwellenwert, Helligkeitsschwellenwert, Kontrastschwellenwert, Farbschwellenwert, überschreitet,
derart erstellt wird, dass das in der zumindest einen Interaktionsumgebungs-Aufnahme (A) enthaltene Abbild der einzelnen Interaktionselemente (3a, ..., 3d) im Anzeigebild (C) dargestellt wird,
- wobei die Bildmaske erstellt wird, indem die positionsweise, insbesondere pixelweise, erstellte Abstandsinformation und der positionsweise, insbesondere pixelweise, ermittelte Bildparameterwert, insbesondere der Schärfewert und/oder Helligkeits- und/oder Kontrastwert und/oder Farbwert, herangezogen wird, um zu ermitteln, ob und in welchem Ausmaß die zumindest eine Interaktionsumgebungs-Aufnahme (A) und/oder das bereitgestellte Umgebungsbild (B) für die Erstellung des Anzeigebilds (C) herangezogen werden,
- wobei die zumindest eine Interaktionsumgebungs-Aufnahme (A) und das bereitgestellte Umgebungsbild (B) unter Verwendung der Bildmaske pixelweise überlagert werden,
- wobei das derart überlagerte Bild als Anzeigebild (C) auf der Anzeigeeinheit (2) angezeigt wird,
- wobei mehrere verschiedenartige Abstandssensoren vorgesehen sind,
- wobei in Abhängigkeit von der Tageszeit, der Sonneneinstrahlung, der Umgebungsbeleuchtung, Oberflächeneigenschaften von Objekten in der Interaktionsumgebung (U) und/oder einer Simulationsumgebung (S) ein Wechsel des Abstandssensors, dessen Abstandsinformation für die Erstellung der Bildmaske herangezogen wird, vorgenommen wird,
- wobei für die Überprüfung, ob ein in einem Bildbereich der zumindest einen Interaktionsumgebungs-Aufnahme (A) abgebildeter Gegenstandsbereich der Interaktionsumgebung (U) einen vorgegebenen Abstandsschwellenwert überschreitet, ein Hüllobjekt in Bezug auf die Interaktionsumgebung (U) festgelegt wird und
- wobei eine Überblendungszone in einem vorgegebenen Abstandsbereich um das Hüllobjekt vorgegeben wird,
- wobei bei der Überlagerung der zumindest einen Interaktionsumgebungs-Aufnahme (A) und des bereitgestellten Umgebungsbilds (B) jeweils die Transparenz derjenigen Bildpunkte der zumindest einen Interaktionsumgebungs-Aufnahme (A) und des Umgebungsbilds (B), insbesondere nach einer vorgegebenen Funktion, vorgegeben wird, die Gegenstandsbereiche innerhalb dieser Überblendungszone abbilden.

2. Verfahren nach Anspruch 1, **dadurch gekennzeichnet, dass**
- für die Bereitstellung des Umgebungsbilds (B)
- zumindest eine, zumindest Teile einer Simulationsumgebung (S), abbildende, Simulationsumgebungs-Aufnahme, insbesondere zwei Simulationsumgebungs-Aufnahmen, mittels zumindest einer zweiten, in der Simulationsumgebung angeordneten Bildaufnahmeeinheit (51), erstellt wird,
wobei die Position der zweiten Bildaufnahmeeinheit (51) in der Simulationsumgebung (S) ermittelt wird und
wobei das Umgebungsbild (B) aus der Simulationsumgebung (S) abhängig von der Position der Person (1) und der Position der zweiten Bildaufnahmeeinheit (51) derart bereitgestellt wird, dass die Aufnahmebereiche der ersten Bildaufnahmeeinheit (5; 5a, 5b) und der zweiten Bildaufnahmeeinheit (51) miteinander gekoppelt sind,
- wobei die Bildmaske derart bereitgestellt wird, dass einzelne Positionen auf der zumindest einen Interaktionsumgebungs-Aufnahme (A), der zumindest einen Simulationsumgebungs-Aufnahme, der Bildmaske und dem Anzeigebild (C) einander zugeordnet sind, wobei
- eine Simulationsumgebungs-Abstandsinformation zwischen der zumindest einen zweiten Bildaufnahmeeinheit (51) und der Simulationsumgebung (S) ermittelt wird und positionsweise, insbesondere pixelweise, die Simulationsumgebungs-Abstandsinformation den einzelnen Bildbereichen der zumindest einen Simulationsumgebungs-Aufnahme zugeordnet wird,
und
positionsweise, insbesondere pixelweise, zumindest ein Bildparameterwert, insbesondere ein Bildparameterwert ausgewählt aus Bildschärfewert, Helligkeitswert, Kontrastwert, Farbwert, der einzelnen Bildbereiche der zumindest einen Simulationsumgebungs-Aufnahme ermittelt wird und
- wobei die Bildmaske durch zusätzliche Prüfung,
- ob der im jeweiligen Bildbereich der zumindest einen Simulationsumgebungs-Aufnahme abgebildete Gegenstandsbereich der Simulationsumgebung (S) einen vorgegebenen Simulationsumgebungs-Abstandsschwellenwert überschreitet
und
- ob der jeweilige Bildbereich der zumindest einen Simulationsumgebungs-Aufnahme zumindest einen für die Simulationsumgebung (S) vorgegebenen Bildparameter-Schwellenwert, insbesondere zumindest einen Bildparameter-Schwellenwert ausgewählt aus Bildschärfeschwellenwert, Helligkeitsschwellenwert, Kontrastschwellenwert, Farbschwellenwert, überschreitet,
erstellt wird und
- wobei für die Erstellung des Anzeigebilds (C) die zumindest eine Interaktionsumgebungs-Aufnahme (A) und das bereitgestellte Umgebungsbild (B) aus der Simulationsumgebung (S) unter Verwendung der Bildmaske pixelweise überlagert werden.

3. Verfahren nach Anspruch 1 oder 2, **dadurch gekennzeichnet, dass** ein Schwellenwertvergleich vorgenommen wird, um zu ermitteln, ob und in welchem Ausmaß die zumindest eine Interaktionsumgebungs-Aufnahme (A) und/oder das bereitgestellte Umgebungsbild (B) für die Erstellung des Anzeigebilds (C) herangezogen werden.

4. Verfahren nach einem der Ansprüche 1 bis 3, **dadurch gekennzeichnet,**
**dass** die Abstandsinformation auf Grundlage der Interaktionsumgebungs-Aufnahme (A), und/oder gegebenenfalls auf Grundlage der Simulationsumgebungs-Aufnahme ermittelt wird, und/oder
**dass** die Abstandsinformation mittels eines auf der Person (1), insbesondere der Anzeigeeinheit (2), und/oder gegebenenfalls auf zweiten Bildaufnahmeeinheit (51), angeordneten Abstandssensors ermittelt wird,
wobei insbesondere vorgesehen ist, dass mittels des Abstandssensors ein Abstandsbild der Interaktionsumgebung (U), und/oder gegebenenfalls der Simulationsumgebung (S), erstellt wird.

5. Verfahren nach der vorangehenden Ansprüche, **dadurch gekennzeichnet,**
- **dass** verschiedenartige Abstandssensoren, die auf unterschiedlichen physikalischen Messprinzipien beruhen, vorgesehen sind und/oder
- **dass** die von mehreren Abstandssensoren bereitgestellten Abstandsinformationen als Grundlage für die Erstellung einer Gesamtbildmaske herangezogen werden.

6. Verfahren nach einem der vorangehenden Ansprüche, **dadurch gekennzeichnet, dass** die Abstandsinformation anhand der zumindest einen Interaktionsumgebungs-Aufnahme (A), und gegebenenfalls der Simulationsumgebungs-Aufnahme, durch einen Algorithmus bereitgestellt wird, der auf Techniken des Maschinellen Lernens, insbesondere künstlichen neuronalen Netzwerken und/oder Support Vector Machines, basiert,
wobei insbesondere vorgesehen ist, dass ein neuronales Netzwerk anhand von Trainingsdaten trainiert wird, wobei die Trainingsdaten Aufnahmen umfassen, deren Bildpixel mit Abstandsinformationen verknüpft sind.

7. Verfahren nach einem der vorangehenden Ansprüche, **dadurch gekennzeichnet, dass** für die Überprüfung, ob ein in einem Bildbereich der zumindest einen Simulationsumgebungs-Aufnahme abgebildeter Gegenstandsbereich der Simulationsumgebung (S), einen vorgegebenen Abstandsschwellenwert überschreitet, ein Hüllobjekt in Bezug auf die Simulationsumgebung (S), festgelegt wird.

8. Verfahren nach einem der vorangehenden Ansprüche, **dadurch gekennzeichnet,**
**dass** in der zumindest einen Interaktionsumgebungs-Aufnahme (A), und/oder gegebenenfalls der zumindest einen Simulationsumgebungs-Aufnahme (S) als Umgebungsbild (B) aus der Simulationsumgebung (S), Abbilder von Objekten ermittelt werden, deren Oberfläche eine vorgegebene oberflächlich erkennbare Eigenschaft, insbesondere eine vorgegebene Helligkeit oder Farbe oder ein vorgegebenes Muster, aufweist und
**dass** die Abbilder der derart ermittelten Objekte nicht für die Überlagerung der zumindest einen Interaktionsumgebungs-Aufnahme (A) und des Umgebungsbilds (B) herangezogen werden.

9. Verfahren nach einem der vorangehenden Ansprüche, **dadurch gekennzeichnet,**
**dass** bei der Überlagerung der zumindest einen Interaktionsumgebungs-Aufnahme (A) und des bereitgestellten Umgebungsbilds (B) der Simulationsumgebung (S), jeweils die Transparenz derjenigen Bildpunkte der zumindest einen Interaktionsumgebungs-Aufnahme (A) und des Umgebungsbilds (B), insbesondere nach einer vorgegebenen Funktion, vorgegeben wird, die Gegenstandsbereiche innerhalb dieser Überblendungszone abbilden.

10. Verfahren nach einem der vorangehenden Ansprüche, **dadurch gekennzeichnet, dass** diejenigen Bildpunkte der zumindest einen Interaktionsumgebungs-Aufnahme (A) und des bereitgestellten Umgebungsbilds (B), die Gegenstandsbereiche abbilden, deren Entfernung dem Abstandsschwellenwert entspricht, bei der Überlagerung gleich transparent vorgegeben werden.

11. Verfahren nach einem der vorangehenden Ansprüche, **dadurch gekennzeichnet,**
- **dass** die Bildmaske im Überlagerungsbereich der zumindest einen Interaktionsumgebungs-Aufnahme (A) und des bereitgestellten Umgebungsbilds (B) geglättet wird, sodass die einzelnen Pixelwerte der Bildmaske ein Verhältnis definieren, in dem die betreffenden Pixelwerte der zumindest einen Interaktionsumgebungs-Aufnahme (A) und des bereitgestellten Umgebungsbilds (B) einander überlagern, und/oder
- **dass** die Belichtung und/oder Blendenzahl der ersten Bildaufnahmeeinheit (5; 5a, 5b) und/oder der zweiten Bildaufnahmeeinheit (51) an Objekte, deren Abstand den vorgegebenen Abstandsschwellenwert überschreitet, angepasst wird.

12. Simulationsanordnung zur Darstellung einer Umgebung als Anzeigebild (C) im Rahmen einer Simulation umfassend
- eine an einer Person (1) anordenbare Anzeigeeinheit (2), insbesondere eine 3D-Brille, die dazu ausgebildet ist, empfange Anzeigebilder für eine Person (1) anzuzeigen,
- eine Interaktionsumgebung (U), insbesondere ein Cockpit, wobei in der Interaktionsumgebung (U) eine Anzahl von betätigbaren Interaktionselementen (3a, ..., 3d) angeordnet sind, wobei die Simulation mittels der Interaktionselemente (3a, ..., 3d) beeinflussbar ist,
- zumindest eine erste, an einer oder relativ zu einer Person (1) anordenbare, Bildaufnahmeeinheit (5; 5a, 5b), die dazu ausgebildet ist, zu einem jeweiligen Aufnahmezeitpunkt zumindest eine Interaktionsumgebungs-Aufnahme (A), insbesondere zwei Interaktionsumgebungs-Aufnahmen, zumindest von Teilen der Interaktionsumgebung (U) zu erstellen, und
- eine mit der Anzeigeeinheit (2) und der ersten Bildaufnahmeeinheit (5; 5a, 5b) in Datenkommunikation stehende Steuer- und Verarbeitungseinheit (4), wobei die Steuer- und Verarbeitungseinheit (4) dazu ausgebildet ist,
- die Position einer Person (1) in der Interaktionsumgebung (U) zu ermitteln und abhängig von dieser Position (1) ein Umgebungsbild (B) aus einer virtuellen und/oder realen Umgebung bereitzustellen,
- die zumindest erste Bildaufnahmeeinheit (5; 5a, 5b) zur Erstellung von Interaktionsumgebungs-Aufnahmen (A) anzusteuern,
- eine Abstandsinformation zwischen der Person (1) und der Interaktionsumgebung (U) zu ermitteln oder zu verarbeiten und positionsweise, insbesondere pixelweise, die Abstandsinformation den einzelnen Bildbereichen der zumindest einen Interaktionsumgebungs-Aufnahme (A) zuzuordnen und positionsweise, insbesondere pixelweise, zumindest einen Bildparameterwert, insbesondere einen Bildparameterwert ausgewählt aus Bildschärfewert, Helligkeitswert, Kontrastwert, Farbwert, der einzelnen Bildbereiche der zumindest einen Interaktionsumgebungs-Aufnahme (A) zu ermitteln, und
- eine Bildmaske durch Prüfung,
- ob der im jeweiligen Bildbereich der zumindest einen Interaktionsumgebungs-Aufnahme (A) abgebildete Gegenstandsbereich der Interaktionsumgebung (U) einen vorgegebenen Interaktionsumgebungs-Abstandsschwellenwert überschreitet,
und
- ob der jeweilige Bildbereich der zumindest einen Interaktionsumgebungs-Aufnahme (A) zumindest einen für die Interaktionsumgebung vorgegebenen Bildparameter-Schwellenwert, insbesondere zumindest einen Bildparameter-Schwellenwert ausgewählt aus Bildschärfeschwellenwert, Helligkeitsschwellenwert, Kontrastschwellenwert, Farbschwellenwert, überschreitet,
derart zu erstellen, dass das in der zumindest einen Interaktionsumgebungs-Aufnahme (A) enthaltene Abbild der einzelnen Interaktionselemente (3a, ..., 3d) im Anzeigebild (C) dargestellt wird,
- einzelne Positionen auf der zumindest einen Interaktionsumgebungs-Aufnahme (A), dem Umgebungsbild (B), der Bildmaske und dem Anzeigebild (C) einander zuzuordnen,
- die zumindest eine Interaktionsumgebungs-Aufnahme (A) und das bereitgestellte Umgebungsbild (B) unter Verwendung der Bildmaske pixelweise zu überlagern, und
- das derart überlagerte Bild als Anzeigebild (C) an die Anzeigeeinheit (2) zu übermitteln,
- wobei die Simulationsanordnung mehrere verschiedenartige Abstandssensoren umfasst, wobei die Steuer- und Verarbeitungseinheit (4) dazu ausgebildet ist in Abhängigkeit von der Tageszeit, der Sonneneinstrahlung, der Umgebungsbeleuchtung, Oberflächeneigenschaften von Objekten in der Interaktionsumgebung (U) und/oder der Simulationsumgebung (S) einen Abstandssensor für die Bereitstellung von Abstandsinformation für die Erstellung der Bildmaske auszuwählen und
- wobei die Steuer- und Verarbeitungseinheit (4) dazu ausgebildet ist,
- zur Erstellung der Bildmaske, die positionsweise, insbesondere pixelweise, erstellte Abstandsinformation und den positionsweise, insbesondere pixelweise, ermittelten Bildparameterwert, insbesondere der Schärfewert und/oder Helligkeits- und/oder Kontrastwert und/oder Farbwert, heranzuziehen, um zu ermitteln, ob und in welchem Ausmaß die zumindest eine Interaktionsumgebungs-Aufnahme (A) und/oder das bereitgestellte Umgebungsbild (B) für die Erstellung des Anzeigebilds (C) herangezogen werden,
- für die Überprüfung, ob ein in einem Bildbereich der zumindest einen Interaktionsumgebungs-Aufnahme (A) abgebildeter Gegenstandsbereich der Interaktionsumgebung (U) einen vorgegebenen Abstandsschwellenwert überschreitet, ein Hüllobjekt in Bezug auf die Interaktionsumgebung (U) festzulegen und
- eine Überblendungszone in einem vorgegebenen Abstandsbereich um das Hüllobjekt vorzugeben, und
- bei der Überlagerung der zumindest einen Interaktionsumgebungs-Aufnahme (A) und des bereitgestellten Umgebungsbilds (B) jeweils die Transparenz derjenigen Bildpunkte der zumindest einen Interaktionsumgebungs-Aufnahme (A) und des Umgebungsbilds (B), insbesondere nach einer vorgegebenen Funktion, vorzugeben, die Gegenstandsbereiche innerhalb dieser Überblendungszone abbilden.

13. Simulationsanordnung nach Anspruch 12, **dadurch gekennzeichnet,**
**dass** die Simulationsanordnung für die Bereitstellung des Umgebungsbilds (B) zumindest eine zweite, in einer Simulationsumgebung (S) angeordnete, Bildaufnahmeeinheit (51) umfasst, die dazu ausgebildet ist, zumindest eine, zumindest Teile einer Simulationsumgebung (S) abbildende Simulationsumgebungs-Aufnahme, insbesondere zwei Simulationsumgebungs-Aufnahmen, zu erstellen,
wobei die Steuer- und Verarbeitungseinheit (4) mit der zweiten Bildaufnahmeeinheit (51) in Datenkommunikation steht und
**dass** die Steuer- und Verarbeitungseinheit (4) dazu ausgebildet ist,
- die Position der zweiten Bildaufnahmeeinheit (51) in der Simulationsumgebung (S) zu ermitteln,
- die zumindest eine zweite Bildaufnahmeeinheit (51) anzusteuern, das Umgebungsbild (B) aus der Simulationsumgebung (S) abhängig von der Position der Person (1) in der Interaktionsumgebung (U) und der Position der zweiten Bildaufnahmeeinheit (51) derart bereitzustellen, dass die Aufnahmebereiche der zumindest einen ersten Bildaufnahmeeinheit (5; 5a, 5b) und der zumindest einen zweiten Bildaufnahmeeinheit (51) miteinander gekoppelt sind,
- eine Abstandsinformation zwischen der zumindest einen zweiten Bildaufnahmeeinheit (51) und der Simulationsumgebung (S) zu ermitteln oder zu verarbeiten und positionsweise, insbesondere pixelweise, die Abstandsinformation den einzelnen Bildbereichen der zumindest einen Simulationsumgebungs-Aufnahme zuzuordnen
und
positionsweise, insbesondere pixelweise, zumindest einen Bildparameterwert, insbesondere zumindest einen Bildparameterwert ausgewählt aus Bildschärfewert, Helligkeitswert, Kontrastwert, Farbwert der zumindest einen Simulationsumgebungs-Aufnahme zu ermitteln, und
- die Bildmaske durch zusätzliche Prüfung,
- ob der im jeweiligen Bildbereich der zumindest einen Simulationsumgebungs-Aufnahme abgebildete Gegenstandsbereich der Simulationsumgebung (S) einen vorgegebenen Simulationsumgebungs-Abstandsschwellenwert überschreitet
und
- ob der jeweilige Bildbereich der zumindest einen Simulationsumgebungs-Aufnahme zumindest einen für die Simulationsumgebung (S) vorgegebenen Bildparameter-Schwellenwert, insbesondere zumindest einen Bildparameter-Schwellenwert ausgewählt aus Bildschärfeschwellenwert, Helligkeitsschwellenwert, Kontrastschwellenwert, Farbschwellenwert, überschreitet,
zu erstellen,
- einzelne Positionen auf der zumindest einen Interaktionsumgebungs-Aufnahme (A), der Simulationsumgebungs-Aufnahme als Umgebungsbild (B), der Bildmaske und dem Anzeigebild (C) einander zuzuordnen, und
- für die Erstellung des Anzeigebilds (C) die zumindest eine Interaktionsumgebungs-Aufnahme (A) und das bereitgestellte Umgebungsbild (B) aus der Simulationsumgebung (S) unter Verwendung der Bildmaske pixelweise zu überlagern.

14. Simulationsanordnung nach Anspruch 12 oder 13, **dadurch gekennzeichnet,**
- **dass** die Simulationsanordnung zumindest einen auf einer Person (1), insbesondere der Anzeigeeinheit (2), und/oder einer Bildaufnahmeeinheit (5; 5a, 5b; 51) anordenbaren Abstandssensor umfasst, wobei insbesondere vorgesehen ist, dass der zumindest eine Abstandssensor dazu ausgebildet ist, ein Abstandsbild der Interaktionsumgebung (U) und/oder der Simulationsumgebung (S) zu erstellen, und/oder
- **dass** die verschiedenartigen Abstandssensoren auf unterschiedlichen physikalischen Messprinzipien beruhen.

15. Simulationsanordnung nach einem der Ansprüche 12 bis 14, **dadurch gekennzeichnet, dass** die Steuer- und Verarbeitungseinheit (4) dazu ausgebildet ist, ein Verfahren nach einem der Ansprüche 1 bis 11 durchzuführen.

## Claims

1. Method for representing an environment by means of a display unit (2) arranged on a person (1) and visible for the person (1), in particular by means of a set of 3D glasses, as a display image (C) in the context of a simulation,
- wherein the simulation is carried out in an interaction environment (U), in particular a cockpit, wherein a number of actuatable interaction elements (3a, ..., 3d) is arranged in the interaction environment (U) and wherein the simulation can be influenced by means of the interaction elements (3a, ..., 3d),
- wherein at least one interaction environment recording (A) depicting at least parts of the interaction environment (U), in particular two interaction environment recordings (A), is created by means of at least one first image recorder (5; 5a, 5b) arranged on the person (1) or relative to the person (1),
- wherein the position of the person (1) in the interaction environment (U) is ascertained and, depending on the position of the person (1), an environment image (B) from a virtual and/or real environment is provided,
- wherein an image mask is provided,
- wherein individual positions on the at least one interaction environment recording (A), the environment image (B), the image mask, and the display image (C) are associated with one another,
- wherein interaction environment distance information between the person (1) and the interaction environment (U) is ascertained and, position by position, in particular pixel by pixel, the interaction environment distance information is associated with the individual image areas of the at least one interaction environment recording (A),
and
position by position, in particular pixel by pixel, at least one image parameter value, in particular an image parameter value selected from image sharpness value, brightness value, contrast value, color value, of the individual image areas of the at least one interaction environment recording (A) is ascertained, and
- wherein the image mask is created by checking
- whether the object area of the interaction environment (U) depicted in the respective image area of the at least one interaction environment recording (A) exceeds a predetermined interaction environment distance threshold value, and
- whether the respective image area of the at least one interaction environment recording (A) exceeds at least one image parameter threshold value predetermined for the interaction environment, in particular at least one image parameter threshold value selected from image sharpness threshold value, brightness threshold value, contrast threshold value, color threshold value,
such that the depiction of the individual interaction elements (3a, ..., 3d) contained in the at least one interaction environment recording (A) is represented in the display image (C),
- wherein the image mask is created by using the distance information created position by position, in particular pixel by pixel, and the image parameter value ascertained position by position, in particular pixel by pixel, in particular the sharpness value and/or brightness value and/or contrast value and/or color value, to ascertain whether and to what extent the at least one interaction environment recording (A) and/or the provided environment image (B) are used for creation of the display image (C),
- wherein the at least one interaction environment recording (A) and the provided environment image (B) are superimposed pixel by pixel using the image mask,
- wherein the image superimposed in this way is displayed as the display image (C) on the display unit (2),
- wherein a plurality of different distance sensors is provided,
- wherein, depending on the time of day, solar radiation, ambient lighting, surface properties of objects in the interaction environment (U) and/or a simulation environment (S), a change of the distance sensor whose distance information is used for the creation of the image mask is performed,
- wherein for the checking as to whether an object area of the interaction environment (U) depicted in an image area of the at least one interaction environment recording (A) exceeds a predetermined distance threshold value, an envelope object is defined with respect to the interaction environment (U), and
- wherein a superposition zone is predetermined in a predetermined distance area around the envelope object,
- wherein upon superimposition of the at least one interaction environment recording (A) and of the provided environment image (B), the transparency of those image points of the at least one interaction environment recording (A) and of the environment image (B), in particular according to a predefined function, which depict the object areas within this superposition zone, is predetermined.

2. Method according to claim 1, **characterized in that**
- for the provision of the environment image (B),
- at least one simulation environment recording, in particular two simulation environment recordings, depicting at least parts of a simulation environment (S), is created by means of at least one second image recorder (51) arranged in the simulation environment (S),
wherein the position of the second image recorder (51) in the simulation environment (S) is ascertained, and
wherein the environment image (B) from the simulation environment (S) is provided depending on the position of the person (1) and the position of the second image recorder (51), such that the recording areas of the first image recorder (5; 5a, 5b) and of the second image recorder (51) are coupled to one another,
- wherein the image mask is provided in such a way that individual positions on the at least one interaction environment recording (A), the at least one simulation environment recording, the image mask and the display image (C) are associated with one another, wherein
- simulation environment distance information between the at least one second image recorder (51) and the simulation environment (S) is ascertained, and position by position, in particular pixel by pixel, the simulation environment distance information is associated with the individual image areas of the at least one simulation environment recording,
and
position by position, in particular pixel by pixel, at least one image parameter value, in particular an image parameter value selected from image sharpness value, brightness value, contrast value, color value, of the individual image areas of the at least one simulation environment recording is ascertained, and
- wherein the image mask is created by additionally checking
- whether the object area of the simulation environment (S) depicted in the respective image area of the at least one simulation environment recording exceeds a predetermined simulation environment distance threshold value, and
- whether the respective image area of the at least one simulation environment recording exceeds at least one image parameter threshold value predetermined for the simulation environment (S), in particular at least one image parameter threshold value selected from image sharpness threshold value, brightness threshold value, contrast threshold value, color threshold value,
and
- wherein the at least one interaction environment recording (A) and the provided environment image (B) from the simulation environment (S) are superimposed pixel by pixel using the image mask to create the display image (C).

3. Method according to claim 1 or 2, **characterized in that** a threshold value comparison is carried out in order to ascertain whether and to what extent the at least one interaction environment recording (A) and/or the provided environment image (B) are used for creating the display image (C).

4. Method according to any one of claims 1 to 3, **characterized in that**
the distance information is ascertained on the basis of the interaction environment recording (A), and/or optionally on the basis of the simulation environment recording, and/or
**in that** the distance information is ascertained by means of a distance sensor arranged on the person (1), in particular on the display unit (2), and/or optionally on a second image recorder (51),
wherein it is in particular provided that by means of the distance sensor a distance image of the interaction environment (U), and/or optionally of the simulation environment (S), is created.

5. Method according to the preceding claims, **characterized in that**
- different types of distance sensors based on different physical measuring principles are provided and/or
- **in that** the distance information provided by several distance sensors is used as a basis for creating an overall image mask.

6. Method according to any one of the preceding claims, **characterized in that**
the distance information is provided on the basis of the at least one interaction environment recording (A), and optionally of the simulation environment recording, by means of an algorithm which is based on machine learning techniques, in particular artificial neural networks and/or support vector machines,
wherein it is in particular provided that a neural network is trained by means of training data, wherein the training data comprises recordings whose image pixels are linked with distance information.

7. Method according to any one of the preceding claims, **characterized in that**
for the checking as to whether an object area of the simulation environment (S) depicted in an image area of the at least one simulation environment recording exceeds a predetermined distance threshold value, an envelope object is defined with respect to the simulation environment (S).

8. Method according to any one of the preceding claims, **characterized in that**
in the at least one interaction environment recording (A), and/or where applicable, in the at least one simulation environment recording (S) as an environment image (B) from the simulation environment (S), depictions of objects are ascertained, a surface of which has a predetermined superficially recognizable property, in particular a predetermined brightness or color or a predetermined pattern, and
**in that** the depictions of the objects ascertained in this way are not used for the superimposition of the at least one interaction environment recording (A) and the environment image (B).

9. Method according to any one of the preceding claims, **characterized in that**
upon superimposition of the at least one interaction environment recording (A) and of the provided environment image (B) of the simulation environment (S), the transparency of those image points of the at least one interaction environment recording (A) and of the environment image (B), in particular according to a predefined function, which depict the object areas within this superposition zone, is predetermined.

10. Method according to any one of the preceding claims, **characterized in that**
those image points of the at least one interaction environment recording (A) and of the provided environment image (B), which depict object areas whose distance corresponds to the distance threshold value, are predetermined to be equally transparent during the superimposition.

11. Method according to any one of the preceding claims, **characterized in that**
- the image mask is smoothed in the superimposition area of the at least one interaction environment recording (A) and of the provided environment image (B), so that the individual pixel values of the image mask define a ratio in which the corresponding pixel values of the at least one interaction environment recording (A) and of the provided environment image (B) are superimposed on one another, and/or
- the exposure and/or f-stop of the first image recorder (5; 5a, 5b) and/or of the second image recorder (51) is adapted to objects a distance of which exceeds the predetermined distance threshold value.

12. Simulation arrangement for representing an environment as a display image (C) in the context of a simulation, comprising
- a display unit (2) which can be arranged on a person (1), in particular a set of 3D glasses, which is configured to display received display images for a person (1),
- an interaction environment (U), in particular a cockpit, wherein a number of actuatable interaction elements (3a, ..., 3d) is arranged in the interaction environment (U), wherein the simulation can be influenced by means of the interaction elements (3a, ..., 3d),
- at least one first image recorder (5; 5a, 5b) which can be arranged on or relative to a person (1) and is configured to create at a respective recording point in time at least one interaction environment recording (A), in particular two interaction environment recordings, at least of parts of the interaction environment (U), and
- a control and processing unit (4) in data communication with the display unit (2) and the first image recorder (5; 5a, 5b), wherein the control and processing unit (4) is configured:
- to ascertain the position of a person (1) in the interaction environment (U) and, depending on this position (1), to provide an environment image (B) from a virtual and/or real environment,
- to actuate the at least first image recorder (5; 5a, 5b) to create interaction environment recordings (A),
- to ascertain or process distance information between the person (1) and the interaction environment (U) and to associate, position by position, in particular pixel by pixel, the distance information with the individual image areas of the at least one interaction environment recording (A) and to ascertain, position by position, in particular pixel by pixel, at least one image parameter value, in particular an image parameter value selected from image sharpness value, brightness value, contrast value, color value, of the individual image areas of the at least one interaction environment recording (A), and
- to create an image mask by checking
- whether the object area of the interaction environment (U) depicted in the respective image area of the at least one interaction environment recording (A) exceeds a predetermined interaction environment distance threshold value, and
- whether the respective image area of the at least one interaction environment recording (A) exceeds at least one image parameter threshold value predetermined for the interaction environment, in particular at least one image parameter threshold value selected from image sharpness threshold value, brightness threshold value, contrast threshold value, color threshold value,
such that the depiction of the individual interaction elements (3a, ..., 3d) contained in the at least one interaction environment recording (A) is represented in the display image (C),
- to associate individual positions on the at least one interaction environment recording (A), the environment image (B), the image mask, and the display image (C) with one another,
- to superimpose the at least one interaction environment recording (A) and the provided environment image (B) pixel by pixel using the image mask, and
- to transmit the image superimposed in this way as the display image (C) to the display unit (2),
- wherein the simulation arrangement comprises several different types of distance sensors, wherein the control and processing unit (4) is configured to select a distance sensor for providing distance information for the creation of the image mask depending on the time of day, solar irradiation, ambient lighting, surface properties of objects in the interaction environment (U) and/or simulation environment (S), and
- wherein the control and processing unit (4) is configured
- for creating the image mask, to use the distance information created position by position, in particular pixel by pixel, and the image parameter value ascertained position by position, in particular pixel by pixel, in particular the sharpness value and/or brightness value and/or contrast value and/or color value, to ascertain whether and to what extent the at least one interaction environment recording (A) and/or the provided environment image (B) are used for creation of the display image (C),
- for the checking as to whether an object area of the interaction environment (U) depicted in an image area of the at least one interaction environment recording (A) exceeds a predetermined distance threshold value, to define an envelope object with respect to the interaction environment (U), and
- to predetermine a superposition zone within a predetermined distance area around the envelope object, and
- upon superimposition of the at least one interaction environment recording (A) and of the provided environment image (B), to predetermine, in particular according to a predefined function, the transparency of those image points of the at least one interaction environment recording (A) and of the environment image (B) which depict the object areas within this superposition zone.

13. Simulation arrangement according to claim 12, **characterized in that**
the simulation arrangement comprises, for the provision of the environment image (B), at least one second image recorder (51) arranged in a simulation environment (S) and configured to create at least one simulation environment recording depicting at least parts of a simulation environment (S), in particular two simulation environment recordings,
wherein the control and processing unit (4) is in data communication with the second image recorder (51), and
the control and processing unit (4) is configured:
- to ascertain the position of the second image recorder (51) in the simulation environment (S),
- to actuate the at least one second image recorder (51), to provide the environment image (B) from the simulation environment (S) depending on the position of the person (1) in the interaction environment (U) and the position of the second image recorder (51), such that the recording areas of the at least one first image recorder (5; 5a, 5b) and of the at least one second image recorder (51) are coupled with one another, - to ascertain or to process distance information between the at least one second image recorder (51) and the simulation environment (S) and to associate the distance information, position by position, in particular pixel by pixel, with the individual image areas of the at least one simulation environment recording,
and
to ascertain, position by position, in particular pixel by pixel, at least one image parameter value, in particular at least one image parameter value selected from image sharpness value, brightness value, contrast value, color value, of the at least one simulation environment recording, and
- to create the image mask by additionally checking
- whether the object area of the simulation environment (S) depicted in the respective image area of the at least one simulation environment recording exceeds a predetermined simulation environment distance threshold value, and
- whether the respective image area of the at least one simulation environment recording exceeds at least one image parameter threshold value predetermined for the simulation environment (S), in particular at least one image parameter threshold value selected from image sharpness threshold value, brightness threshold value, contrast threshold value, color threshold value,
- to associate individual positions on the at least one interaction environment recording (A), the simulation environment recording as the environment image (B), the image mask, and the display image (C) with one another, and
- to superimpose the at least one interaction environment recording (A) and the provided environment image (B) from the simulation environment (S) pixel by pixel using the image mask to create the display image (C).

14. Simulation arrangement according to claim 12 or 13, **characterized in that**
- the simulation arrangement comprises at least one distance sensor which can be arranged on a person (1), in particular on the display unit (2) and/or an image recorder (5; 5a, 5b; 51), wherein it is in particular provided that the at least one distance sensor is configured to create a distance image of the interaction environment (U) and/or of the simulation environment (S), and/or
- the different types of distance sensors are based on different physical measuring principles.

15. Simulation arrangement according to any one of claims 12 to 14, **characterized in that** the control and processing unit (4) is configured to perform a method according to any one of claims 1 to 11.

## Revendications

1. Procédé de représentation d'un environnement au moyen d'une unité d'affichage (2) disposée sur une personne (1) et visible par la personne (1), en particulier au moyen de lunettes 3D, en tant qu'image d'affichage (C) dans le cadre d'une simulation,
- dans lequel la simulation est réalisée dans un environnement d'interaction (U), en particulier un cockpit, dans lequel un certain nombre d'éléments d'interaction actionnables (3a, ..., 3d) sont disposés dans l'environnement d'interaction (U) et dans lequel la simulation peut être influencée au moyen des éléments d'interaction (3a, ..., 3d),
- dans lequel au moins un enregistrement d'environnement d'interaction (A) représentant au moins des parties de l'environnement d'interaction (U), en particulier deux enregistrements d'environnement d'interaction (A), est créé au moyen d'au moins une première unité d'enregistrement d'image (5 ; 5a, 5b) disposée sur la personne (1) ou par rapport à la personne (1),
- dans lequel la position de la personne (1) dans l'environnement d'interaction (U) est déterminée et une image d'environnement (B) provenant d'un environnement virtuel et/ou réel est fournie en fonction de la position de la personne (1),
- dans lequel un masque d'image est fourni,
- dans lequel des positions individuelles sur au moins un enregistrement d'environnement d'interaction (A), l'image d'environnement (B), le masque d'image et l'image d'affichage (C) sont attribués les uns aux autres,
- dans lequel une information de distance d'environnement d'interaction entre la personne (1) et l'environnement d'interaction (U) est déterminée et l'information de distance d'environnement d'interaction est attribuée, position par position, en particulier pixel par pixel, aux zones d'image individuelles de l'au moins un enregistrement d'environnement d'interaction (A), et
au moins une valeur de paramètre d'image, en particulier une valeur de paramètre d'image sélectionnée parmi la valeur de netteté de l'image, valeur de luminosité, valeur de contraste, valeur de couleur, est déterminée position par position, en particulier pixel par pixel, pour les zones d'image individuelles de l'au moins un enregistrement d'environnement d'interaction (A) et
- dans lequel le masque d'image est représenté en vérifiant
- si la zone d'objet de l'environnement d'interaction (U) représentée dans la zone d'image respective de l'au moins une image d'environnement d'interaction (A) dépasse une valeur seuil de distance d'environnement d'interaction prédéfinie, et
- si la zone d'image respective de l'au moins une image d'environnement d'interaction (A) dépasse au moins une valeur seuil de paramètre d'image prédéfinie pour l'environnement d'interaction, en particulier au moins une valeur seuil de paramètre d'image sélectionnée parmi la valeur seuil de netteté d'image, valeur seuil de luminosité, valeur seuil de contraste, valeur seuil de couleur prédéfinie pour l'environnement d'interaction,
de sorte que l'image des éléments d'interaction individuels (3a, ..., 3d) contenue dans au moins un enregistrement d'environnement d'interaction (A) est représentée dans l'image d'affichage (C),
- dans lequel le masque d'image est créé en utilisant les informations de distance créées position par position, en particulier pixel par pixel, et la valeur de paramètre d'image déterminée position par position, en particulier pixel par pixel, en particulier la valeur de netteté et/ou valeur de luminosité et/ou valeur de contraste et/ou valeur de couleur, sont utilisées pour déterminer si et dans quelle mesure l'au moins un enregistrement d'environnement d'interaction (A) et/ou l'image d'environnement fournie (B) sont utilisées pour créer l'image d'affichage (C),
- dans lequel l'au moins un enregistrement d'environnement d'interaction (A) et l'image d'environnement fournie (B) sont superposées pixel par pixel en utilisant le masque d'image,
- dans lequel l'image ainsi superposée est affichée en tant qu'image d'affichage (C) sur l'unité d'affichage (2),
- dans lequel plusieurs capteurs de distance de types différents sont prévus,
- dans lequel un changement du capteur de distance, dont les informations de distance sont utilisées pour créer le masque d'image, est effectué en fonction de l'heure de la journée, du rayonnement solaire, de l'éclairage ambiant, des propriétés de surface des objets dans l'environnement d'interaction (U) et/ou d'un environnement de simulation (S),
- dans lequel un objet enveloppant est défini par rapport à l'environnement d'interaction (U) pour vérifier si une zone d'objet de l'environnement d'interaction (U) représentée dans une zone d'image de l'au moins un enregistrement d'environnement d'interaction (A) dépasse une valeur seuil de distance prédéfinie, et
- dans lequel une zone de fondu est prédéfinie dans une plage de distance prédéfinie autour de l'objet enveloppant,
- dans lequel, lors de la superposition de l'au moins un enregistrement d'environnement d'interaction (A) et de l'image d'environnement fournie (B), la transparence des pixels de l'au moins un enregistrement d'environnement d'interaction (A) et de l'image d'environnement (B) qui représentent des zones d'objets à l'intérieur de cette zone de transition est prédéfinie, en particulier selon une fonction prédéfinie.

2. Procédé selon la revendication 1, **caractérisé en ce que**
- pour fournir l'image d'environnement (B)
- au moins des parties d'un environnement de simulation (S), reproduisant l'enregistrement d'environnement de simulation, en particulier deux enregistrements de l'environnement de simulation, sont créés au moyen d'au moins une seconde unité d'enregistrement d'image (51) disposée dans l'environnement de simulation,
dans lequel la position de la seconde unité d'enregistrement d'image (51) est déterminée dans l'environnement de simulation (S) et
dans lequel l'image d'environnement (B) provenant de l'environnement de simulation (S) est fournie en fonction de la position de la personne (1) et de la position de la seconde unité d'enregistrement (51) de sorte que les zones d'enregistrement de la première unité d'enregistrement (5 ; 5a, 5b) et de la seconde unité d'enregistrement (51) sont couplées entre elles,
- dans lequel le masque d'image est fourni de sorte que des positions individuelles sur au moins un enregistrement d'environnement d'interaction (A), au moins une image d'environnement de simulation, le masque d'image et l'image d'affichage (C) sont associées les unes aux autres,
- une information de distance d'environnement de simulation est déterminée entre l'au moins une seconde unité d'enregistrement (51) et l'environnement de simulation (S) et, position par position, en particulier pixel par pixel, l'information de distance d'environnement de simulation est attribuée aux zones d'image individuelles de l'au moins un enregistrement d'environnement de simulation,
et
au moins une valeur de paramètre d'image, en particulier une valeur de paramètre d'image sélectionnée parmi la valeur de netteté de l'image, valeur de luminosité, valeur de contraste, valeur de couleur, est déterminée position par position, en particulier pixel par pixel, pour les zones d'image individuelles de l'au moins un enregistrement d'environnement de simulation et
- dans lequel le masque d'image est créé en vérifiant en outre
- si la zone d'objet de l'environnement de simulation représentée dans la zone d'image respective de l'au moins une image d'environnement de simulation (S) dépasse une valeur seuil de distance d'environnement de simulation prédéfinie, et
- si la zone d'image respective de l'au moins une image d'environnement de simulation dépasse au moins une valeur seuil de paramètre d'image prédéfinie pour l'environnement de simulation (S), en particulier au moins une valeur seuil de paramètre d'image sélectionnée parmi la valeur seuil de netteté d'image, valeur seuil de luminosité, valeur seuil de contraste, valeur seuil de couleur prédéfinie pour l'environnement d'interaction,
et
- dans lequel pour la création de l'image d'affichage (C), l'au moins une image d'environnement d'interaction (A) et l'image d'environnement (B) fournie à partir de l'environnement de simulation (S) sont superposées pixel par pixel en utilisant le masque d'image.

3. Procédé selon la revendication 1 ou 2, **caractérisé en ce qu'**une comparaison de seuils est effectuée pour déterminer si et dans quelle mesure l'au moins un enregistrement d'environnement d'interaction (A) et/ou l'image d'environnement fournie (B) sont utilisés pour la création de l'image d'affichage (C).

4. Procédé selon l'une quelconque des revendications 1 à 3, **caractérisé en ce que**
les informations de distance sont déterminées sur la base de l'enregistrement d'environnement d'interaction (A) et/ou, le cas échéant, sur la base de l'enregistrement d'environnement de simulation, et/ou
**en ce que** les informations de distance sont déterminées au moyen d'un capteur de distance disposé sur la personne (1), en particulier sur l'unité d'affichage (2), et/ou, le cas échéant, sur une seconde unité d'enregistrement d'image (51),
dans lequel il est en particulier prévu qu'une image de distance de l'environnement d'interaction (U) et/ou, le cas échéant, de l'environnement de simulation (S) est créée au moyen du capteur de distance.

5. Procédé selon les revendications précédentes, **caractérisé en ce que**
- différents types de capteurs de distance, qui sont basés sur différents principes de mesure physiques, sont prévus et/ou
- les informations de distance fournies par plusieurs capteurs de distance sont utilisées comme base pour la création d'un masque d'image global.

6. Procédé selon l'une quelconque des revendications précédentes, caractérisé en ce
les informations de distance sont fournies à l'aide au moins d'un enregistrement d'environnement d'interaction (A) et, le cas échéant, de l'enregistrement d'environnement de simulation, par un algorithme basé sur des techniques d'apprentissage automatique, en particulier des réseaux neuronaux artificiels et/ou des machines à vecteurs de support,
dans lequel il est en particulier prévu qu'un réseau neuronal est entraîné au moyen de données d'entraînement, dans lequel les données d'entraînement comprennent des enregistrements dont les pixels d'image sont associés à des informations de distance.

7. Procédé selon l'une quelconque des revendications précédentes, caractérisé en ce
pour vérifier si une zone d'objet de l'environnement de simulation (S) représentée dans une zone d'image de l'au moins une image d'environnement de simulation dépasse une valeur seuil de distance prédéfinie, un objet enveloppant est défini par rapport à l'environnement de simulation (5).

8. Procédé selon l'une quelconque des revendications précédentes, caractérisé en ce
dans au moins un enregistrement d'environnement d'interaction (A) et/ou, le cas échéant, dans au moins un enregistrement d'environnement de simulation (S) en tant qu'image d'environnement (B) provenant de l'environnement de simulation (S), des images d'objets dont la surface présente une propriété reconnaissable en surface prédéfinie, en particulier une luminosité ou une couleur prédéfinie ou un motif prédéfini, sont déterminées et
les images des objets ainsi déterminés ne sont pas utilisées pour la superposition de l'au moins une image d'environnement d'interaction (A) et de l'image d'environnement (B).

9. Procédé selon l'une quelconque des revendications précédentes, caractérisé en ce
lors de la superposition de l'au moins un enregistrement d'environnement d'interaction (A) et de l'image d'environnement fournie (B) de l'environnement de simulation (S), la transparence des pixels de l'au moins un enregistrement d'environnement d'interaction (A) et de l'image d'environnement (B) qui représentent des zones d'objets à l'intérieur de cette zone de transition est prédéfinie, en particulier selon une fonction prédéfinie.

10. Procédé selon l'une quelconque des revendications précédentes, caractérisé en ce
les pixels de l'au moins un enregistrement d'environnement d'interaction (A) et de l'image d'environnement fournie (B) qui représentent des zones d'objets dont la distance correspond à la valeur seuil de distance sont prédéfinis comme étant de même transparence lors de la superposition.

11. Procédé selon l'une quelconque des revendications précédentes, caractérisé en ce
- le masque d'image est lissé dans la zone de superposition de l'au moins un enregistrement d'environnement d'interaction (A) et de l'image d'environnement fournie (B), de sorte que les valeurs de pixels individuelles du masque d'image définissent un rapport dans lequel les valeurs de pixels correspondantes de l'au moins un enregistrement d'environnement d'interaction (A) et de l'image d'environnement fournie (B) se superposent, et/ou
- l'exposition et/ou le nombre d'ouvertures de la première unité d'enregistrement (5 ; 5a, 5b) et/ou de la seconde unité d'enregistrement (51) sont adaptés aux objets dont la distance dépasse la valeur seuil de distance prédéfinie.

12. Agencement de simulation pour représenter un environnement en tant qu'image d'affichage (C) dans le cadre d'une simulation, comprenant
- une unité d'affichage (2), en particulier des lunettes 3D, pouvant être disposée sur une personne (1), qui est conçue pour afficher des images d'affichage reçues pour une personne (1),
- un environnement d'interaction (U), en particulier un cockpit, dans lequel un certain nombre d'éléments d'interaction actionnables (3a, ..., 3d) sont disposés dans l'environnement d'interaction (U), dans lequel la simulation peut être influencée au moyen des éléments d'interaction (3a, ..., 3d),
- au moins une première unité d'enregistrement (5 ; 5a, 5b) peut être disposée sur ou par rapport à une personne (1), qui est conçue pour créer, à un moment d'enregistrement respectif, au moins un enregistrement d'environnement d'interaction (A), en particulier deux enregistrements de l'environnement d'interaction, au moins de parties de l'environnement d'interaction (U), et
- une unité de commande et de traitement (4) en communication de données avec l'unité d'affichage (2) et la première unité d'enregistrement (5 ; 5a, 5b), dans lequel l'unité de commande et de traitement (4) est conçue pour
- déterminer la position d'une personne (1) dans l'environnement d'interaction (U) et, en fonction de cette position (1), fournir une image d'environnement (B) provenant d'un environnement virtuel et/ou réel,
- commander au moins la première unité d'enregistrement (5 ; 5a, 5b) pour créer des enregistrements d'environnement d'interaction (A),
- déterminer ou traiter une information de distance entre la personne (1) et l'environnement d'interaction (U) et attribuer, position par position, en particulier pixel par pixel, l'information de distance aux zones d'image individuelles de l'au moins un enregistrement d'environnement d'interaction (A) et attribuer, position par position, en particulier pixel par pixel, au moins une valeur de paramètre d'image, en particulier une valeur de paramètre d'image sélectionnée parmi la valeur de netteté de l'image, valeur de luminosité, valeur de contraste, valeur de couleur, aux zones d'image individuelles de l'au moins un enregistrement d'environnement d'interaction (A), et
- un masque d'image en vérifiant
- si la zone d'objet de l'environnement d'interaction (U) représentée dans la zone d'image respective de l'au moins une image d'environnement d'interaction (A) dépasse une valeur seuil de distance d'environnement d'interaction prédéfinie,
et
- si la zone d'image respective de l'au moins une image d'environnement d'interaction (A) dépasse au moins une valeur seuil de paramètre d'image prédéfinie pour l'environnement d'interaction, en particulier au moins une valeur seuil de paramètre d'image sélectionnée parmi la valeur seuil de netteté d'image, valeur seuil de luminosité, valeur seuil de contraste, valeur seuil de couleur prédéfinie pour l'environnement d'interaction,
de manière à représenter l'image des éléments d'interaction individuels (3a, ..., 3d) contenue dans au moins un enregistrement d'environnement d'interaction (A) dans l'image d'affichage (C),
- attribuer des positions individuelles sur au moins un enregistrement d'environnement d'interaction (A), l'image d'environnement (B), le masque d'image et l'image d'affichage (C) les uns aux autres,
- superposer l'au moins un enregistrement d'environnement d'interaction (A) et l'image d'environnement fournie (B) pixel par pixel en utilisant le masque d'image, et
- transmettre l'image ainsi superposée à l'unité d'affichage (2) en tant qu'image d'affichage (C),
- dans lequel l'agencement de simulation comprend plusieurs capteurs de distance de types différents, dans lequel l'unité de commande et de traitement (4) est conçue pour, en fonction de l'heure de la journée, du rayonnement solaire, de l'éclairage ambiant, des propriétés de surface d'objets dans l'environnement d'interaction (U) et/ou l'environnement de simulation (S) sélectionner un capteur de distance pour la fourniture d'informations de distance pour la création du masque d'image et
- dans lequel l'unité de commande et de traitement (4) est conçue pour
- créer l'image de masque en utilisant les informations de distance créées position par position, en particulier pixel par pixel, et utiliser la valeur de paramètre d'image déterminée position par position, en particulier pixel par pixel, en particulier la valeur de netteté et/ou valeur de luminosité et/ou valeur de contraste et/ou valeur de couleur, pour déterminer si et dans quelle mesure l'au moins un enregistrement d'environnement d'interaction (A) et/ou l'image d'environnement fournie (B) sont utilisées pour créer l'image d'affichage (C),
- pour définir un objet enveloppant par rapport à l'environnement d'interaction (U) pour vérifier si une zone d'objet de l'environnement d'interaction (U) représentée dans une zone d'image de l'au moins un enregistrement d'environnement d'interaction (A) dépasse une valeur seuil de distance prédéfinie, et
- prédéfinir une zone de fondu dans une plage de distance prédéfinie autour de l'objet enveloppant, et
- lors de la superposition de l'au moins un enregistrement d'environnement d'interaction (A) et de l'image d'environnement fournie (B), prédéfinir la transparence des pixels de l'au moins un enregistrement d'environnement d'interaction (A) et de l'image d'environnement (B) qui représentent des zones d'objets à l'intérieur de cette zone de transition, en particulier selon une fonction prédéfinie.

13. Agencement de simulation selon la revendication 12, **caractérisé en ce que**
l'agencement de simulation comprend, pour la fourniture de l'image d'environnement (B), au moins une seconde unité d'enregistrement (51) disposée dans un environnement de simulation (S), qui est conçue pour créer au moins une image d'environnement de simulation représentant au moins des parties d'un environnement de simulation (S), en particulier deux images d'environnement de simulation,
dans lequel l'unité de commande et de traitement (4) est en communication de données avec la seconde unité d'enregistrement (51) et
l'unité de commande et de traitement (4) est conçue pour
- déterminer la position de la seconde unité d'enregistrement (51) dans l'environnement de simulation (S),
- commander au moins une seconde unité d'enregistrement (51), fournir l'image d'environnement (B) à partir de l'environnement de simulation (S) en fonction de la position de la personne (1) dans l'environnement d'interaction (U) et de la position de la seconde unité d'enregistrement (51) de sorte que les zones d'enregistrement de l'au moins une première unité d'enregistrement (5 ; 5a, 5b) et de l'au moins une seconde unité d'enregistrement (51) sont couplées entre elles, - déterminer ou traiter une information de distance entre l'au moins une seconde unité d'enregistrement (51) et l'environnement de simulation (S) et attribuer, position par position, en particulier pixel par pixel, l'information de distance aux zones d'image individuelles de l'au moins un enregistrement d'environnement de simulation
et
déterminer, position par position, en particulier pixel par pixel, au moins une valeur de paramètre d'image, en particulier au moins une valeur de paramètre d'image sélectionnée parmi la valeur de netteté de l'image, valeur de luminosité, valeur de contraste, valeur de couleur de l'au moins une image d'environnement de simulation, et
- créer le masque d'image en vérifiant en outre
- si la zone d'objet de l'environnement de simulation représentée dans la zone d'image respective de l'au moins une image d'environnement de simulation (S) dépasse une valeur seuil de distance d'environnement de simulation prédéfinie
et
- si la zone d'image respective de l'au moins une image d'environnement de simulation dépasse au moins une valeur seuil de paramètre d'image prédéfinie pour l'environnement de simulation (S), en particulier au moins une valeur seuil de paramètre d'image sélectionnée parmi la valeur seuil de netteté d'image, valeur seuil de luminosité, valeur seuil de contraste, valeur seuil de couleur prédéfinie pour l'environnement d'interaction,
- attribuer des positions individuelles les unes aux autres sur au moins un enregistrement d'environnement d'interaction (A), l'image d'environnement de simulation en tant qu'image d'environnement (B), le masque d'image et l'image d'affichage (C), et
- pour la création de l'image d'affichage (C), superposer l'au moins une image d'environnement d'interaction (A) et l'image d'environnement (B) fournie à partir de l'environnement de simulation (S) pixel par pixel en utilisant le masque d'image.

14. Agencement de simulation selon la revendication 12 ou 13, **caractérisé en ce que**
- l'agencement de simulation comprend au moins un capteur de distance pouvant être disposé sur une personne (1), en particulier l'unité d'affichage (2), et/ou une unité d'enregistrement (5 ; 5a, 5b ; 51), dans lequel il est en particulier prévu que l'au moins un capteur de distance est conçu pour créer une image de distance de l'environnement d'interaction (U) et/ou de l'environnement de simulation (S), et/ou
- les différents types de capteurs de distance sont basés sur différents principes de mesure physiques.

15. Agencement de simulation selon l'une quelconque des revendications 12 à 14, **caractérisé en ce que** l'unité de commande et de traitement (4) est conçue pour exécuter un procédé selon l'une quelconque des revendications 1 à 11.
